Europäisches Patentamt

European Patent Office

Office européen des brevets

(19)

(11) Publication number: **0 055 128**
**B1**

# EUROPEAN PATENT SPECIFICATION

(45) Date of publication of patent specification: **17.02.88**

(51) Int. Cl.⁴: **G 06 F 9/30,** G 06 F 9/38, G 06 F 5/00

(21) Application number: **81306043.1**

(22) Date of filing: **22.12.81**

(54) Data processing system.

(30) Priority: **24.12.80 US 219809**
**24.12.80 US 220219**
**24.12.80 US 220220**

(43) Date of publication of application:
**30.06.82 Bulletin 82/26**

(45) Publication of the grant of the patent:
**17.02.88 Bulletin 88/07**

(84) Designated Contracting States:
**BE DE FR GB IT NL**

(56) References cited:
**GB-A-2 039 109**
**US-A-3 916 388**

**PROCEEDINGS OF THE IEEE INTERNATIONAL
CONFERENCE ON CIRCUITS AND
COMPUTERS ICCC 80, 1st-3rd October 1980,
pages 1184-1187, Port Chester, NY (USA);
R.BLOCK et al.: "Architecture for VLSI-circuits
in digital signal processing"**

(73) Proprietor: **Honeywell Information Systems Inc.**
**200 Smith Street**
**Waltham County of Middlesex, Massachusetts**
**02154 (US)**

(72) Inventor: **Tague, Steven A.**
**158 Concord Road**
**Billerica Massachusetts (US)**
Inventor: **Negi, Virendra S.**
**64 Park Street**
**Pepperell Massachusetts (US)**

(74) Representative: **Votier, Sidney David et al**
**CARPMAELS & RANSFORD 43, Bloomsbury
Square**
**London WC1A 2RA (GB)**

Courier Press, Leamington Spa, England.

# 0 055 128

### Description

This invention relates generally to the execution of decimal alphanumeric instructions by a commercial instruction processor of a data processing system, and more specifically to apparatus which controls the selection of decimal digits when executing decimal arithmetic instructions.

A data processing system which executes decimal arithmetic instructions includes a main memory for storing the decimal arithmetic instructions and operands. The operands may be in packed decimal form or string decimal form. The packed decimal operand includes up to 8 decimal digits stored in each double word, 4 binary data bits per decimal digit. The string decimal operand includes up to 4 bytes in each double word. Each byte may represent a decimal digit in the form of 4 zone bits and 4 binary data bits.

During the execution of the decimal numeric instructions, the corresponding decimal digits for each operand are processed sequentially. For example, during a decimal add instruction, the decimal digits of each operand are added sequentially, least significant decimal digit first.

Since an operand may be in the string decimal form, it is necessary to either strip the zone bits from the operand or in some manner slip over the zone bits.

The number of steps required to execute a decimal alphanumeric instruction are normally reduced if the operands involved which are read from main memory are aligned relative to each other. Some instructions such as a decimal add instruction require the two operands have the least significant decimal digits aligned. A decimal alphanumeric compare instruction requires that the two operands have the high order characters aligned. For the decimal add instruction, successive operand words are transferred from main memory low order word first and for the decimal alphanumeric compare instruction, successive operand words are transferred form main memory high order word first.

The characteristics of the operand may be defined by words called data descriptors and are usually transferred from memory following the instruction word. The data descriptor information may include a binary bit indicating a string or packed decimal operand, a binary-field indicating the number of bytes or digits in the operand, the position in the high order word of the high order byte or digit, and the location of the sign character, a trailing, leading or "overpunched" sign.

A data processing system using data descriptors is known from GB—A—2039109.

Accordingly the present invention provides a data processor coupled to a main memory for executing decimal arithmetic instructions under the control of operation codes and descriptor words that describe the characteristics of the operands, including the operand length and the operand type (packed decimal or string decimal); the processor operating serially by digit; including descriptor storage register means for storing said descriptor words; control store means responsive to the operation code for generating a plurality of control signals; arithmetic and logic means; and register means for storing operands and their addresses, characterized by a read only memory addressed by the contents of the descriptor storage register means and by said control signals during the progress of a decimal arithmetic instruction, said read only memory generating alignment signals (OPOFF, OPDSP) for pointing to the positions of the next digits in the operand words which are due to be operated on next by the arithmetic and logic means.

A data processing system embodying the invention will now be described, by way of example, with reference to the drawings in which:—

Figure 1 is a block diagram of the overall data processing system;

Figure 2 is a block diagram of the commercial instruction processor 10;

Figure 3 is a block diagram of that portion of the CIP 10 that relates to the decimal multiply operation;

Figure 4 is a detailed logic diagram which includes the multiply read only memory 54 which stores the products and the multiply register 52 which stores the multiplier digit;

Figure 5 shows the elements of a multiplication example which are used to describe the invention;

Figure 6 describes the bit configurations of the data descriptors of the operands of the multiplication example;

Figure 7 is a flow diagram of the multiplication example;

Figure 8 shows the contents of the registers as the CIP 10 executing the steps of the flow diagram;

Figure 9 shows the detailed logic for generating alignment signals;

Figure 10 shows the layout of the Address Displacement Read Only Memory.

Figure 11 shows the layout of the Digit Offset Read Only Memory;

Figure 12 is a detailed logic diagram of the apparatus for generating the next decimal digit position signals;

Figure 13 shows the contents of the increment/decrement read only memory;

Figure 14 is a detailed logic diagram of the write selection apparatus.

A data processing system includes a commercial instruction processor (CIP) which executes decimal instructions. The operands are in string decimal form or in packed decimal form. A word in string decimal form may include 2 bytes, each byte having a zone portion and a digit portion. A word in packed decimal form may include up to 4 decimal digits. The high order byte or digit of the operand may reside in one of two byte positions or any 1 or 4 digit positions in the high order word.

A decimal alphanumeric instruction is specified by an operation code word. Each operand that is operated upon by the instruction is specified by a data descriptor.

The data descriptor specifies whether the operand is in string or packed decimal form, the location of

2

high order byte or digit in the high order word, and the number of bytes or digits in the operand. The data descriptor also speicifies how to use the following word or words to compute the address of the most significant word of the operand.

The length of the operand is stored in a register/counter. Selected register/counter output signals are applied to an address displacement read only memory and a digit offset read only memory.

The address displacement read only memory output signals indicate one less than the number of double words occupied by the operand. This value may be used to anticipate the number of read requests of a main memory and/or to modify the high order word address into the low order word address.

The digit offset read only memory output signals indicate the location of the least significant digit or byte of the least significant word of the operand of the position of the most significant digit or byte of the most significant word of the operand as they will appear in internal double word registers.

Data descriptor signals applied in the input address terminals of the read only memories indicate that the operand is string or packed decimal, and the location within the high order word of the most significant byte if string decimal and the most significant digit if packed decimal.

Control signals are applied to the digit offset read only memory which selects the least significant byte of digit position if the instruction calls for a right-to-left transfer of the operand from main memory (as required on the execution of decimal instructions). The control signals may result in the digit offset read only memory selecting the most significant byte or digit position for instructions such as alphanumeric compare which requires a left-to-right transfer of the operand from main memory.

The control signals may select a direct mode which in the digit offset read only memory indicates the position of the most significant byte or digit without anticipating a left-to-right scan. This mode is also useful in locating the most significant digit after a right-to-left scan.

A read only memory is responsive to the control store signals, the type bit signal and signals indicating the decimal digit position of the operand that is being processed to generate the next decimal digit position of the operand to be processed.

A first control store signal RD07+ when at binary ZERO indicates that the decimal digit position signals are to be decremented and when at binary ONE indicates that the decimal digit position signals are to be incremented.

The type signal OP1TYP+ at binary ZERO indicates that the operand is a string decimal operand and the decimal digit position signals applied to the read only memory are incremented or decremented by two. This eliminates the zone bits from the execution of the arithmetic portion of the decimal arithmetic instruction. The type signal at binary ONE indicates that the operand is a packed decimal operand and the decimal digit position signals applied to the read only memory are incremented or decremented by one.

Operand words are read into a 32 bit register, OP2 66 from main memory, either a single or a double word at a time. The decimal digits are stored in OP2 66 as string decimal bytes or packed decimal digits. Arithmetic operations are performed on the operand words and the results are written into OP2 66, a byte or a decimal digit at a time.

A read only memory generates signals which select the decimal digit position of OP2 66 into which decimal digits, bytes or double words are written. The commercial instruction processor executes decimal arithmetic instructions by processing the operands sequentially a byte or a decimal digit at a time.

The decimal arithmetic instruction signals are received by the commercial instruction processor which generates control signals which are applied to the select, enable and input terminals of a multiplexer. Also applied to a selected pair of input terminals are type signals representative of the state of the descriptor type bit. The multiplexer output signals and the position signals are applied to the input address terminals of the read only memory to generate the position signals of the next byte or decimal digit to be written into OP2 66. The type signal at binary ONE results in the read only memory output signals selecting a decimal digit position in OP2 66. The type signal at binary ZERO results in the read only memory output signals selecting a byte position in OP2 66.

Control signals applied to the multiplexer may select other input signals to generate the multiplexer output signals which are applied to the read only memory to select the byte or decimal digit position signals.

Detailed description

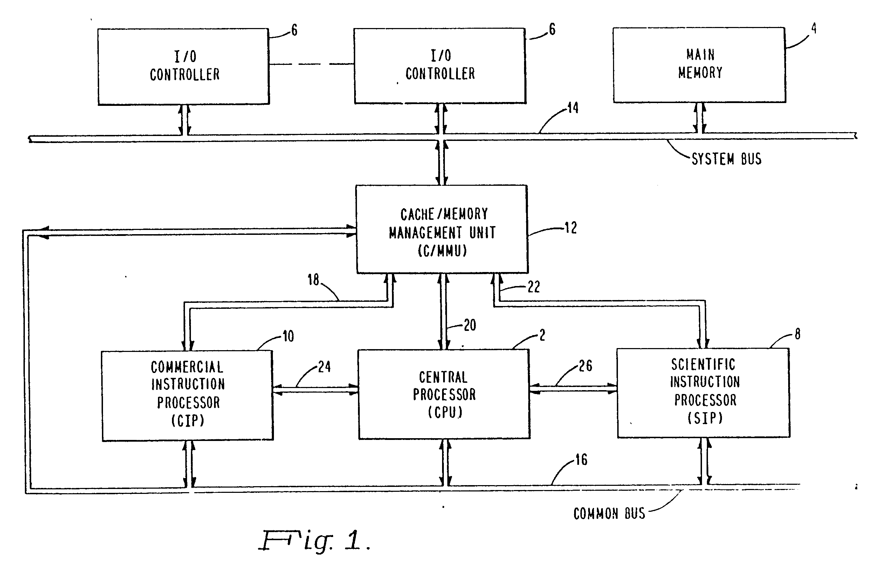

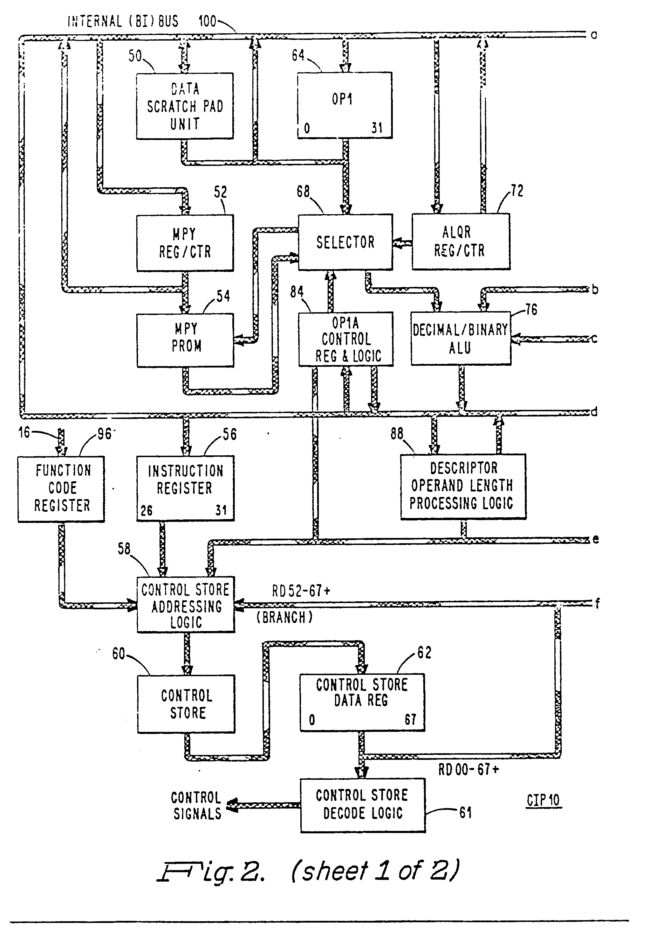

Figure 1 is an overall block diagram of a data processing system which includes a main memory 4, a plurality of input/output controllers 6 and a cache/memory management unit (C/MMU) 12; all coupled in common to a system bus 14. Coupled to the C/MMU 12 are a central processor unit (CPU) 2, a commercial instruction processor (CIP) 10 and a scientific instruction processor (SIP) 8 via buses 20, 18 and 22 respectively. The C/MMU 12, CIP 10, CPU 2 and SIP 8 are coupled in common to a common bus 16. Also, CPU 2 is coupled to the CIP 10 and the SIP 8 via buses 24 and 26 respectively.

The CIP 10 executes a set of instructions designed to facilitate processing of character strings and decimal data. The SIP 8 executes a set of scientific instructions particularly useful for FORTRAN applications. This set includes arithmetic operations on single and double precision floating point operands and single and double word integer operands.

All instructions in a program under execution are received by CPU 2 from C/MMU 12 via buses 16 and 20. CPU 2 determines from the operation code of the instructions if the instruction is to be processed by the CPU 2, the CIP 10, or the SIP 8. The CPU 2 receives status information from the CIP 10 or SIP 8 over buses 24 and 26 respectively. If the CIP 10 or SIP 8 is available, the CPU 2 sends the necessary information out on common bus 16 and also bus 26 for the SIP 8. The CIP 10 or the SIP 8 processes the instruction and is operative with the C/MMU 12 via bus 18 or 22 respectively and bus 16 for processing the instruction.

The CIP 10 processes instructions which include the following:

1. Decimal arithmetic operations on string and packed numeric data.
2. Alphanumeric and decimal move and compare instructions.
3. Conversion between binary and decimal numeric representation.
4. Edit instructions.
5. Arithmetic shift instructions.

Main memory 4 stores instructions and data and is operative with the C/MMU 12 for the transferring of instructions and data over system bus 14 under control of CPU 2 via bus 20.

The C/MMU 12 which includes a cache memory stores the instructions and data currently being processed by the CPU 2, CIP 10 and SIP 8.

The CPU 2 is also operative for initiating transfers of data between the I/O controllers 6 and main memory 4.

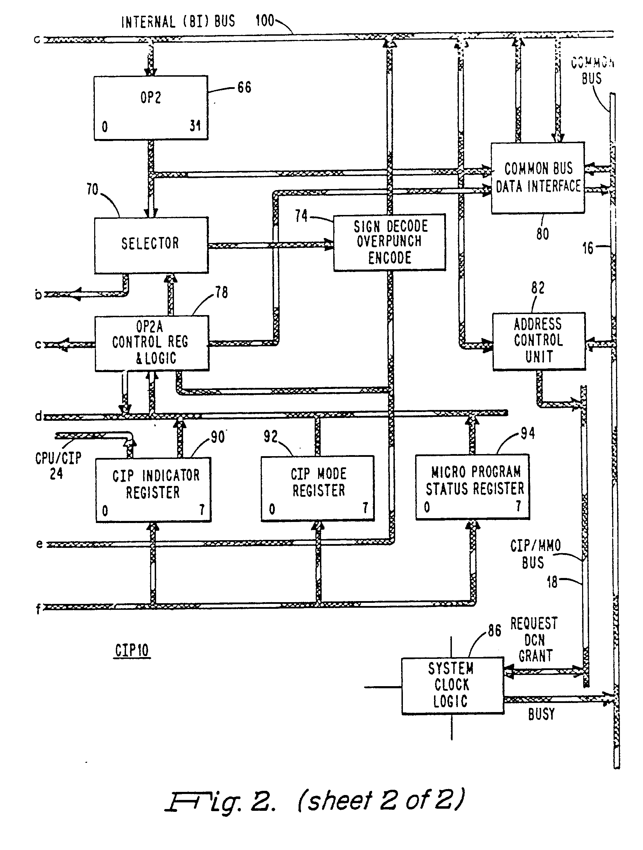

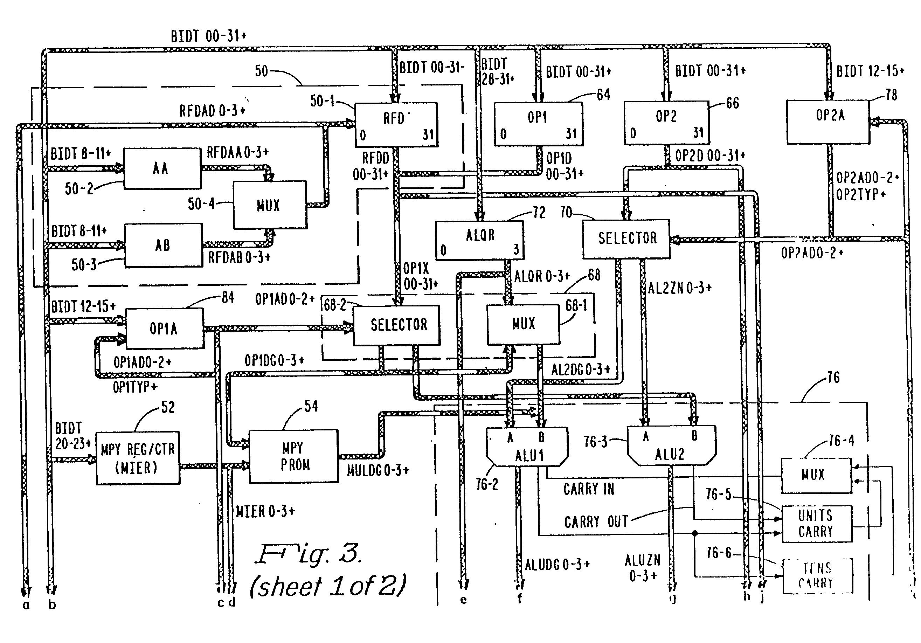

Referring to Figure 2, all CIP 10 operations except initialization operations from a console are initiated by CPU 2 writing a 6 bit function code into a function code register 96 and a 32 bit double word of data into a portion of a common bus data interface 80 via common bus 16. The CIP 10 when activated transfers the low order 6 bits of the double word into an instruction register 56. If the function code register 96 stores an output task function code $07_{16}$, then the low order 16 bits of the double word are stored in a portion of an address control unit 82 to allow the CPU 2 to request the previous instruction word at a later time.

The contents of function code register 96 select a firmware word in a control store 60 via control store addressing logic 58. The firmware word is loaded into a control store data register 62 and conditions CIP 10 to receive additional control information from CPU 2. A control store decode logic 61 generates control signals by decoding the output signals RD 00—67+ from control store data register 62. Signals RD 52—67+ applied to control store addressing logic 58 results in control store 60 branching to a specified address location.

The CIP 10 instructions operate on three data types, decimal strings containing binary coded decimal digits, alphanumeric strings containing ASCII characters and binary numbers having 16 or 32 bit precision. Decimal data operands are referenced by the location of the most significant digit and length and may have one or two digits in a byte. Packed decimal operands store two digits per byte and string decimal operands store one digit per byte.

String decimal operands may be unsigned and assumed positive, may have a leading sign byte placed before the most significant decimal byte, a trailing sign byte placed after the least significant decimal byte or a trailing overpunched sign included with the least significant decimal byte.

Packed decimal operands may be unsigned implying a positive sign or have a trailing sign.

Binary data operands have the most significant binary bit as a sign bit with the binary point assumed to the right of the least significant binary bit using 2's complement notation.

The double words received by CIP 10 from CPU 2 following the instruction word specifying a decimal arithmetic operation indicates the decimal type, string or packed, sign information, the length of the operand and the effective address. This is the address of the byte containing the most significant character (4 or 8 bits/character).

Initially during the processing of a decimal numeric instruction, control store 60 generates signals via control store data register 62 causing the address control unit 82 to send the main memory 4 address of the operand 1 word containing the sign character to C/MMU 12. The operand 1 word containing the sign character is received by common bus data interface 80 and stored in OP1 64 and OP2 66. The sign character is selected by selector 70 for transfer to a sign decode overpunch encode logic 74 where it is decoded into status bits indicating an illegal sign or a negative sign. The control store addressing logic 58 is responsive to the illegal sign status bit and the negative sign status bit. If the sign is legal, then the negative sign status bit is stored in the microprogram status register 94. The operand 2 word containing the sign is processed in a similar manner and stored in OP2 66. Selector 70 transfers the sign character to sign decode overpunch encode logic 74 where it is decoded into the illegal sign or the negative sign and stored in the microprogram status register 94. This allows the CIP 10 to abort the instruction and notify the CPU 2 if an illegal sign was detected.

A decimal add instruction is indicated by an output task function code. $07_{16}$ and the instruction register 96 storing hexadecimal $2C_{16}$. During the execution of the decimal add instruction, operand 1 is added to operand 2 and the result of the addition is stored in the location in main memory 4 that stored operand 2.

The CIP 10 waits for the CPU 2 to send the additional control information required for the CIP 10 to execute the decimal add instruction. The additional control information consists of up to 3 double words describing operand 1 and up to 3 double words describing operand 2. The last double word received from the CPU 2 is an output last data descriptor indicated by a function code of $1F_{16}$.

The first of the 3 double words for each operand contains the effective virtual byte address of the operand which indicates the start of the operand in main memory 4, that is, the leftmost or lowest addressed byte containing some of the operand. The second double word may contain an indirect length.

4

The third double word contains the data descriptor which specifies the data type and the position within the initial word received from main memory 4 of the start of the operand. The six double words are stored in the address control unit 82.

The output of instruction register 56 addresses a word in control store 60 to start the CIP 10 execution of the decimal add instruction by sending the main memory 4 address for the low order word of operand 1 containing the least significant decimal digits to the C/MMU 12 via bus 18. The first word of operand 1 is read from main memory 4 or from a cache memory (not shown) in C/MMU 12 and transferred to CIP 10 via common bus 16 and stored in OP1 64. Similarly, the low order word of operand 2 is received by CIP 10 and stored in data scratchpad unit 50 and in OP2 66.

The bit of each data descriptor word describing the characteristics of the two operands (ASCII string or packed) and the computed position of the least significant decimal digit in their respective low order words for operands 1 and 2 are stored in OP1A 84 and OP2A 78 respectively. In addition, the length of operands 1 and 2 is stored in descriptor operand length processing logic 88. The OP1A 84 output is applied to a selector 68 and the OP2A 78 output is applied to a selector 70 for selecting the operand 1 and operand 2 decimal digits as they are transferred from OP1 64 and OP2 66 for processing by a decimal/binary ALU 76, one decimal digit at a time. The resulting decimal digit of the addition is transferred from ALU 76 to OP2 66 via an internal bus (BI) 100, replacing the operand 2 decimal digit that contributed to this result.

OP1A 84 keeps track of the number of decimal digits remaining in OP1 64 from the transfer of the low order word. When the last decimal digit from the low order word is read from OP1 64 to ALU 76, OP1A 84 signals the branching logic in control store addressing logic 58 to address a word in control store 60 which fetches the next word of operand 1 from main memory 4 via C/MMU 12. The address of the next word of operand 1 is sent from address control unit 82 to C/MMU 12 via bus 18.

Similarly, OP2A 78 signals the branching logic in control store addressing logic 58 to enter into a firmware routine to transfer the resulting word of the addition stored in OP2 66 to common bus data interface 80 for transfer to main memory 4 via common bus 16 to C/MMU 12 at the location specified by the address from address control unit 82 over bus 18. A copy of the result is stored in data scratchpad unit 50. A read cycle is initiated to read the next word of operand 2 by sending the next address from address control unit 82 to C/MMU 12 via bus 18.

When the processing of all of the decimal digits from operand 1 or operand 2 is completed, descriptor operand length processing logic 88 controls the filling out of the field of the result in accordance with the remaining decimal digits of the longer operand. Initially during the multiply instruction execution, the entire multiplicand, operand 2, is transferred from main memory 4 to the data scratchpad unit 50 via common bus data interface 80 and BI bus 100. A multiplier double word of operand 1 is transferred to OP1 64 via common bus data interface 80 and BI bus 100. The least significant multiplier digit is read into a multiply register/counter 52 from OP1 64 via BI bus 100 and is applied to the input address terminals of a multiply programmable read only memory (PROM) 54. Each double word of the multiplicand in turn is transferred to OP1 64 from the data scratchpad 50. Each multiplicand digit in turn is applied to the remaining input address terminals of PROM 54 from OP1 64 via selector 68 to generate the partial product digits. Each partial product digit is applied to ALU 76 via selector 68 where it is added to a corresponding decimal digit stored in OP2 66 and the resultant partial product stored back in OP2 66.

The next multiplier digit is read into multiply register/counter 52 and the output applied to PROM 54. Again each multiplicand digit in turn is applied to PROM 54 and the partial product digits are applied to ALU 76 via selector 68 where they are added to the selected partial product digits stored in OP2 66. Here again, OP2A 78 controls selector 70 to select the partial product digit to be applied to ALU 76. The partial product result from ALU 76 is again stored in OP2 66 via BI bus 100.

When all of the multiplicand digits stored in data scratchpad unit 50 have been applied to the input address terminals of PROM 54 along with the most significant multiplier decimal digit output of multiply register/counter 52, the data scratchpad unit 50 contains the product of the multiplication. This product is written into main memory 4 via OP2 66, common bus data interface 80 and common bus 16.

A decimal division instruction is executed by receiving the dividend and divisor in common bus data interface 80 from C/MMU 12 via common bus 16 for storage in the data scratchpad unit 50. Portions of the divisor are stored in OP1 64 in turn and portions of the dividend/partial remainder are stored in OP2 66 in turn. The CIP 10 executes the decimal divide instruction by a series of successive subtractions and counting the number of successful subtractions in an ALQR register/counter 72. A successful subtraction is one in which the result is a positive number.

The divisor in OP1 64 is applied to ALU 76 through selector 68, a decimal digit at a time, the least significant decimal digit first. The dividend in OP2 66 is applied to ALU 76 through selector 70, a decimal digit at a time. OP2A 78 controls selector 70 to select the decimal digit from OP2 66 that would cause the most significant decimal digits of the divisor in OP1 64 to be aligned with the most significant decimal digit of the dividend for the subtraction operation.

The output of ALU 76 is stored in OP2 66 via BI bus 100 and the contents of ALQR 72 are incremented if the result of the subtraction of the high order decimal digits with the divisor is a positive number. The divisor in OP1 64 is again subtracted from the result of the previous subtraction which is stored in OP2 66 and the contents of ALQR 72 again are incremented if the result of the subtraction is positive.

When the result of the subtraction is a negative number, the divisor stored in OP1 64 is then added to OP2 66 and the contents of ALQR 72 containing a quotient digit are transferred to the data scratchpad unit 50. OP2 66 and data scratchpad unit 50 now contain the result of the last successful subtraction in the high order decimal digits and the remaining decimal digits are the original low order decimal digits of the dividend.

The divisor is subtracted from the dividend one digit position to the right of the previous set of subtractions to develop the next quotient digit. The subtraction operation is repeated as described above with ALQR 72 being incremented for each positive result of the subtraction.

The first quotient digit stored in data scratchpad unit 50 is transferred to OP2 66 via BI bus 100. The contents of ALQR 72 containing the second quotient digit is transferred to OP2 66 via selector 68. ALU 76 and internal bus 100 where it is appended to the first quotient digit for storage in the data scratchpad unit 50. The partial dividend is transferred back to OP2 66 from the data scratchpad unit 50.

The shifting of the divisor and subsequent subtraction operations are repeated until after computing a quotient digit with the least significant decimal digit of the divisor aligned with the least significant decimal digit of the dividend. The last quotient decimal digit from ALQR 72 is merged with the rest of the quotient in the data scratchpad unit 50 and the portion of the remainder now stored in OP2 66 is stored into the data scratchpad unit 50 via BI bus 100. The quotient and remainder in data scratchpad unit 50 are then stored in main memory 4.

A CIP indicator register 90 is set by the control signals to indicate the status of CIP 10. Register 90 includes an overflow indicator which is set during decimal operations when the receiving field cannot store all significant digits of the result or a divide by zero is detected. A truncation indicator is set during alphanumeric operations when the receiving field cannot contain all characters of the result. A sign fault indicator is set during decimal operations when a negative result is stored in an unsigned field. A greater-than indicator is set during the execution of certain decimal and alphanumeric instructions when the result is greater than zero for decimal numeric operations or operand 1 is greater than operand 2 for decimal or arithmetic comparisons. A less than indicator is set during the execution of certain decimal and alphanumeric instructions when the result is less than zero for decimal arithmetic instructions or operand 1 is less than operand 2 for either decimal or alphanumeric comparisons.

A CIP mode register 92 stores an overflow trap mask and a truncation trap mask which are indications of which special action the CIP 10 and CPU 2 should take when the overflow or truncation condition arises.

A system clock logic 86 includes a 160 nanosecond four phase clock that provides clock signals to trigger all CIP 10 registers and all test and control flops, stabilize registers after loading, signify that address, data, control and parity are valid allowing initiation of a local bus cycle. In addition, the system clock logic 86 may be stalled when additional time is required to complete certain CIP 10 functions. The system clock logic 86 generates a BUSY signal over common bus 16 to indicate to CPU 2 that the CIP 10 is not available, receives a DCN signal from the C/MMU 12 bus to signal the CIP 10 that data for the CIP 10 is on the common bus 8, generates a REQUEST for use of the common bus 16, and waits for a GRANT from the C/MMU 12.

The microprocessor status register 94 in addition to storing operand sign information also stores an indication if an overflow was detected in executing a decimal numeric instruction, whether an encode or a decode overpunched sign operation is required, and when a decimal add operation is completed.

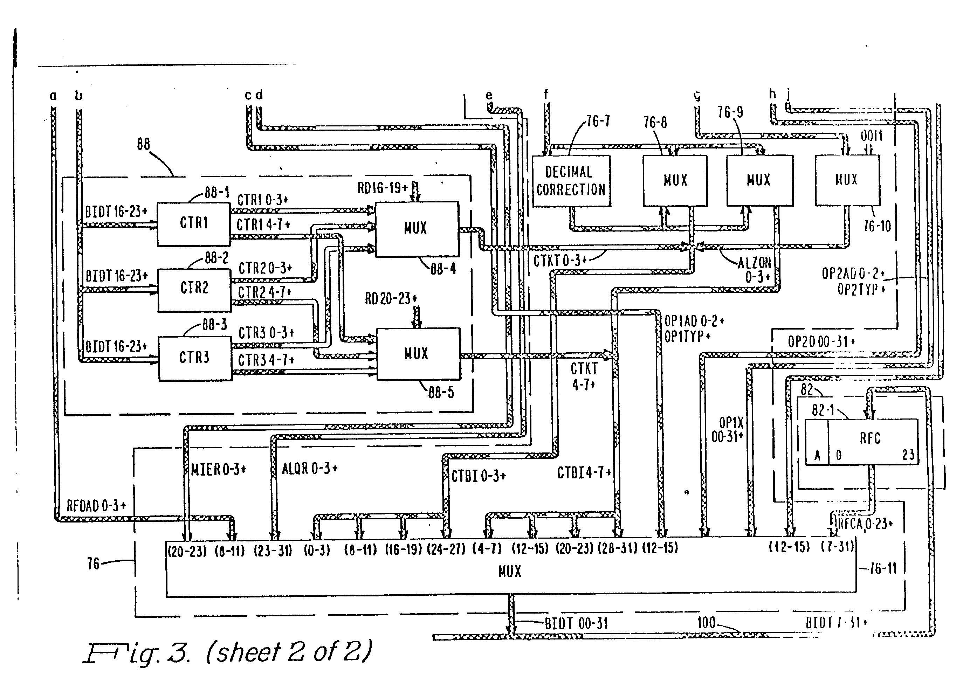

Referring to Figure 3, the data scratchpad unit 50 includes a register file D (RFD) 50-1, a register/counter (AA) 50-2, a register/counter (AB) 50-3 and a MUX 50-4. RFD 50-1 includes 8 4-bit random access memories organized to store 16 32-bit double words. RFD 50-1 is addressed from either AA 50-2 via signals RFDAA 0—3+, MUX 50-4 and signals RFDAD 0—3+, or from AB 50-3 via signals RFDAB 0—3+, MUX 50-4 and signals RFDAD 0—3+, RFD 50-1 is coupled to BI bus 100 via signals BIDT 00—31—. AA 50-2 and AB 50-3 are loaded from BI bus 100 via signals BIDT 8—11+. During the decimal multiply operation, AA 50-2 stores the location in RFD 50-1 of the multiplicand words and AB 50-3 stores the location of the partial product words.

The descriptor operand length processing logic 88 includes a counter 1 88-1, a counter 2 88-2 and a counter 3 88-3 coupled to a MUX 88-4 via signals CTR1 0—3+, CTR2 0—3+ and CTR3 0—3+ respectively; and coupled to a MUX 88-5 via signals CTR1 4—7+, CTR2 4—7+ and CTR3 4—7+ respectively. Signals RD 16—19+ are applied to MUX 88-4 and signals RD 20—23+ are applied to MUX 88-5 to provide miscellaneous constants for transfer onto BI bus 100. Output signals CTKT 0—3+ of MUX 88-4 are coupled to their respective signals CTBI 0—3+. Output signals CTKT 4—7+ of MUX 88-5 are coupled to their respective signals CTBI 4—7+. Signals CTBI 0—3+ are coupled through MUX 76-11 to BI bus 100 signals BIDT 0—3+, BIDT 8—11+, BIDT 16—19+ and BIDT 24—27+ respectively. Signals CTBI 4—7+ are coupled through MUX 76-11 to BI bus 100 signals BIDT 4—7+, BIDT 12—15+, BIDT 20—23+ and BIDT 28—31+ respectively. Counter 1 88-1, counter 2 88-2 and counter 3 88-3 are loaded from BI bus 100 via signals BIDT 16—23+. During a portion of the decimal multiply operation, counter 1 88-1 stores the number of decimal digits in operand 1, and counter 2 88-2 stores the number of decimal digits in operand 2. During another portion of the decimal multiply operation, counter 1 88-1 and counter 2 88-2 store the number of multiplicand decimal digits remaining to be applied to multiply PROM 54 for the multiplier digit stored in multiply register (MIER) 52. Counter 3 88-3 may store the number of decimal digits of the multiplier remaining for processing or the effective length of the multiplicand.

The decimal binary ALU 76 includes a 4-bit arithmetic logic unit (ALU1) 76-2 for processing decimal numeric arithmetic operations and a 4-bit arithmetic logic unit (ALU2) 76-3 for processing alphanumeric operations and code conversions such as binary to decimal and decimal to binary. The ALU1 output signals ALUDG 0—3+ are applied to a MUX 76-8, a MUX 76-9 and a decimal correction unit 76-7. Output signals ALXS 60, 61+ and ALUDG2— from decimal correction 76-7 are applied to MUX's 76-8 and 76-9. MUX 76-8 output signals CTBI 0—3+ and MUX 76-9 output signals CTBI 4—7+ are applied to MUX 76-11 as previously described. The output signals RFDAD 0—3+ of MUX 50-4 are applied to MUX 50-11. Output signals OP1X 00—31+ from RFD 50-1 and OP1 64 are applied to MUX 76-11 as are the output signals OP2D 00—31+ from OP2 66. The outputs of OP1A 84 and OP2A 78, signals OP1AD 0—2+, OP1TYP+, OP2AD 0—2+, and OP2TYP+, are applied to MUX 76-11 and appear at the MUX 76-11 output as signals BIDT 12—15+. Also applied to MUX 76-11 are signals ALQR+ from ALQR 72 and MIER+ from MIER 52 and appear at the MUX 76-11 output as signal BIDT 28—31+ and BIDT 20—23+.

The output of ALU2 76-3, signals ALUZN 0—3+, is applied to a MUX 76-10. Also, a hexadecimal 3 is applied to MUX 76-10 whose output signals ALZON 0—3+ are applied to MUX 76-11.

A register file C (RFC) 82-1 is coupled to the BI bus 100. Selected signals of BI bus 100, BIDT 00—31+, are stored in positions A, 0—23 of RFC 82-1. The logic selecting the input bit positions is not shown since it is not pertinent to the invention. Output signals RFC A,0—23+ from RFC 82-1 are applied to MUX 76-11 and appear on BI bus 100 as signals BIDT 7—31+.

A units carry 76-5 and a tones carry 76-6 are coupled to ALU1 76-2 via a MUX 76-4. During the decimal multiply operation, the units carry 76-5 is operative when the multiply PROM 54 generates the units position decimal digit and the tens carry 76-6 is operative when the multiply from 54 generates the tens position decimal digit.

During the decimal multiply operation, a double word of the partial product is stored in OP2 66 and a double word of the multiplicand is stored in OP1 64. The OP2 66 output signals OP2D 00—31+ are applied to selector 70. The OP2A 78 output signals OP2AD 0—2+ and OP2TYP+ enable selector 70 to transfer the selected decimal digit to terminal A of ALU1 76-2 via signals AL2DG0+. The OP1A 84 output signals OP1AD 0—2+ and OP1TYP+ enable selector 68 to transfer the selected multiplicand digit, received via signals OP1X 00—31+, to multiply PROM 54 via signals OP1DG 0—3+. The output of multiply PROM 54, signals MULDG 0—3+, is applied to terminal B of ALU1 76-2 as signals AL1DG 0—3+. The sum is transferred back to OP2 66 in the selected partial product digit position via MUX's 76-8 or 76-9 and MUX 76-11 via BI bus 100.

A MUX 68-1 transfers the output of ALQR 72, signals ALQR 0—3+, or the output of selector 68-2, signals OP1DG 0—3+, to terminal B of ALU1 76-2 via signals OP1QD 0—3+ and AL1DG 0—3+. Typically, an operand 1 decimal digit in OP1 64 of RFD 50-1 and an operand 2 decimal digit in OP2 66 may be combined in ALU1 76-2 or the contents of ALQR 72 may be combined with a selected decimal digit position in OP2 68 during a divide operation.

RFC 82-1 of the address control unit 82 stores the instruction and the data descriptors describing the characteristics of the operands, RFC 82-1 is made up of 6 4-bit random access memories and a portion of a seventh random access memory organized as 16 25-bit words. Certain locations of RFC 82-1 are used as a scratchpad memory to temporarily store the contents of the various register/counters including AA 50-2, AB 50-3, counter 1 88-1, counter 2 88-2 and counter 3 88-3.

The decimal correction 76-7 is active during the arithmetic operation. BCD coded decimal digits are added by first modifying the selected OP2 66 digit in selector 70 by increasing its binary value of 6 (excess 6 code). When the modified OP2 66 digit (appearing as signals AL2DG 0—3+) is added to the unmodified digit selected from OP1 64 by the binary ALU1 76-2, the binary carry out of ALU1 76-2 is equivalent to a decimal carry. If a carry out is asserted, then the output of ALU1 76-2 appearing on signals ALUDG 0—3+ is the correct BCD representation of the sum. If carry out is not asserted, then ALUDG 0—3+ is an excess 6 representation of the sum and the decimal correction logic is activated to reduce this sum by 6 to produce the correct BCD representation.

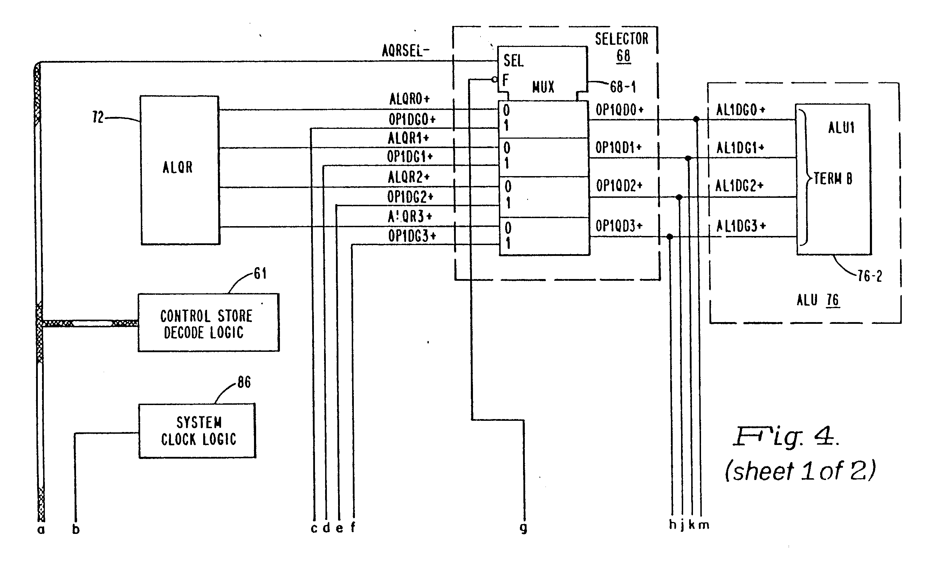

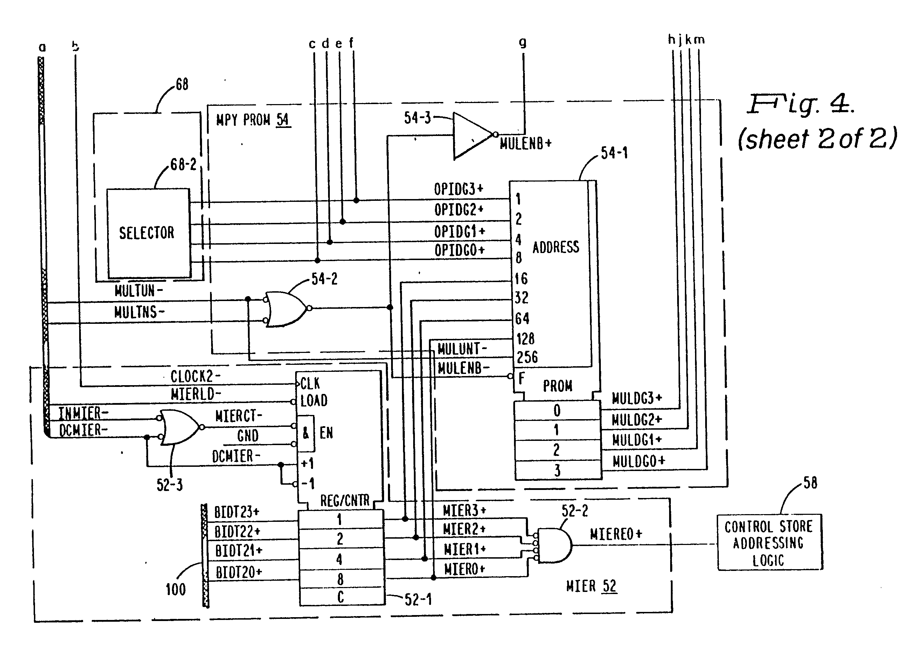

Referring to Figure 4, the multiply PROM 54 includes a read only memory (PROM) 54-1 and a negative logic OR gate 54-2 which enables the PROM 54-1 via signal MULENB—. PROM 54-1 has the capacity for storing 512 decimal digits, 256 units position decimal digits and 256 tens position decimal digits.

The multiply register 52 includes a register/counter 52-1, a negative logic OR gate 52-3 and a not AND gate 52-2. The register/counter 52-1 stores each multiplier digits in turn from the least significant multiplier digit to the most significant multiplier digit. The register/counter 52-1 is also used as a counter by the CIP 10 during the setup of the decimal multiply operation to store a count of the number of multiplicand double words that remain in main memory 4 prior to transfer to the CIP 10. The selector 68-2 includes the MUX 68-1. The selector 68 applies a selected multiplicand digit over signals OP1DG 0—3+ to the 8, 4, 2 and 1 input address terminals of PROM 54-1. The register/counter 52-1 applies the multiplier digit over signal lines MIER 0—3+ to the 128, 64, 32 and 16 input address terminals of PROM 54. The units position of the product appears on output signals MULDG 0—3+ when the PROM 54-1 is enabled by signal MULENB— at logical ZERO and signal MULUNT— at logical ZERO. The tens position of the product appears on the output signals MULDG 0—3+ when PROM 54-1 is enabled and signal MULUNT— is at logical ONE.

The Boolean equation for signal MULUNT— at logical ZERO is:

$$\text{MULUNT}-=[((\overline{\text{RD08}} \cdot \overline{\text{RD09}} \cdot \overline{\text{RD10}} \cdot \overline{\text{RD11}})+\overline{\text{RD16}}+\overline{\text{RD17}}$$
$$+\overline{\text{RD18}}+\text{RD19})(\text{RD46} \cdot \overline{\text{RD47}} \cdot \overline{\text{RD48}} \cdot \overline{\text{RD49}})]$$

Either the tens multiplication signal MULTNS— or the units multiplication signal MULUNT— at logical ZERO applied to negative logic OR gate 54-2 enables PROM 54-1 by forcing signal MULENB− to logical ZERO.

The Boolean equation for signal MULTNS− at logical ZERO is:

$$\text{MULTNS}-=[((\overline{\text{RD08}}\cdot\overline{\text{RD09}}\cdot\overline{\text{RD10}}\cdot\overline{\text{RD11}})+\overline{\text{RD18}}+\overline{\text{RD17}}+\overline{\text{RD18}}+\text{RD19})(\text{RD46}\cdot\overline{\text{RD47}}\cdot\overline{\text{RD48}}\cdot\text{RD49})]$$

Register/counter 52-1 is operative as a counter when keeping track of the number of double words of the multiplicand remaining in main memory 4 when the CIP 10 is being conditioned to perform the decimal multiply instruction. Register/counter 52-1 is decremented at CLOCK2− time when logic signal DCMIER− is at logical ZERO, forcing the output of NOR gate 52-3, enable signal MIERCT−, to logical ZERO and enabling the −1 terminal.

The Boolean equation for signal DCMIER− at logical ZERO is:

$$\text{DCMIER}-=[(\text{RD08}+\text{RD09}+\text{RD10}+\text{RD11})(\text{RD16}\cdot\overline{\text{RD17}}\cdot\text{RD18}\cdot\overline{\text{RD19}})]$$

When register/counter 52-1 is decremented to hexadecimal ZERO, signal MIEREO+ is forced to logical ONE, thereby signalling the control store addressing logic 58 that the transfer of multiplier double words from main memory 4 is concluded after the next transfer.

Register/counter 52-1 is loaded with the number of double words and each multiplier hexadecimal digit in turn from BI bus 100 at CLOCK2− time when signal MIERLD− is at logical ZERO. Signal MIERLD− is applied to the LOAD terminal of register/counter 52-1.

The Boolean equation for signal MIERLD− at logical ZERO is:

$$\text{MIERLD}-+[((\overline{\text{RD08}}\cdot\overline{\text{RD09}}\cdot\overline{\text{RD10}}\cdot\overline{\text{RD11}})+\overline{\text{RD16}}+\overline{\text{RD17}}+\overline{\text{RD18}}+\text{RD19})(\text{RD46}\cdot\overline{\text{RD47}}\cdot\text{RD48}\cdot\text{RD49})]$$

A multiplier digit of hexadecimal ZERO forces signal MIEREO+ to logical ONE which signals the control store addressing logic 58 to bring in the next multiplier hexadecimal digit into register/counter 52-1.

MUX 76-1 provides a high impedance for signals OP1QD 0—3+ when the enable signal output of an inverter 54-3, MULENB+, is at logical ONE. The PROM 54-1 is enabled since signal MULENB− is at logical ZERO and output signals MULDG 0—3+ appear on signal lines AL1DG0+. During the loading of register/counter 52-1, the hexadecimal digit is transferred from OP1 64 in Figure 3, selector 68, MUX 76-1, ALU1 76-2, MUX 76-9, MUX 76-11 and BI bus 100 signals BIDT 20—23+.

Referring to Figure 4, output signals OP1DG 0—3+ are applied to terminal 1 of MUX 68-1. Output signals OP1QD 0—3+ are applied to terminal B of ALU1 76-2 via signals AL1DG 0—3+. Signal AQRSEL− is at logical ONE and signal MULENB+ is at logical ZERO.

The Boolean equation for AQRSEL− at logical ONE is:

$$\text{AQRSEL}-=[(\text{RD08}+\text{RD09}+\text{RD10}+\text{RD11})(\text{RD16}\cdot\text{RD17}\cdot\text{RD18}\cdot\text{RD19})]$$

The ALQR 72 signals ALQR 0—3+ are applied to the terminal 0 of MUX 76-1.

It should be noted that the sequences of operation are controlled by the output signals RD 00—67+ from control store data register 62, Figure 2. The control signals described by the Boolean equations are output signals from control store decode logic 61. (The Boolean notation [RD08 · $\overline{(\text{RD09}+\text{RD10})}$] indicates an output of logical one when signal RD08 is at logical ONE and either or both signal RD09 is at logical ZERO of signal RD10 is at logical ONE).

The invention is described by the following example. The multiplicand is 009876543210+ and the multiplier is 78+. The product of the multiplicand and the multiplier is 770370380+.

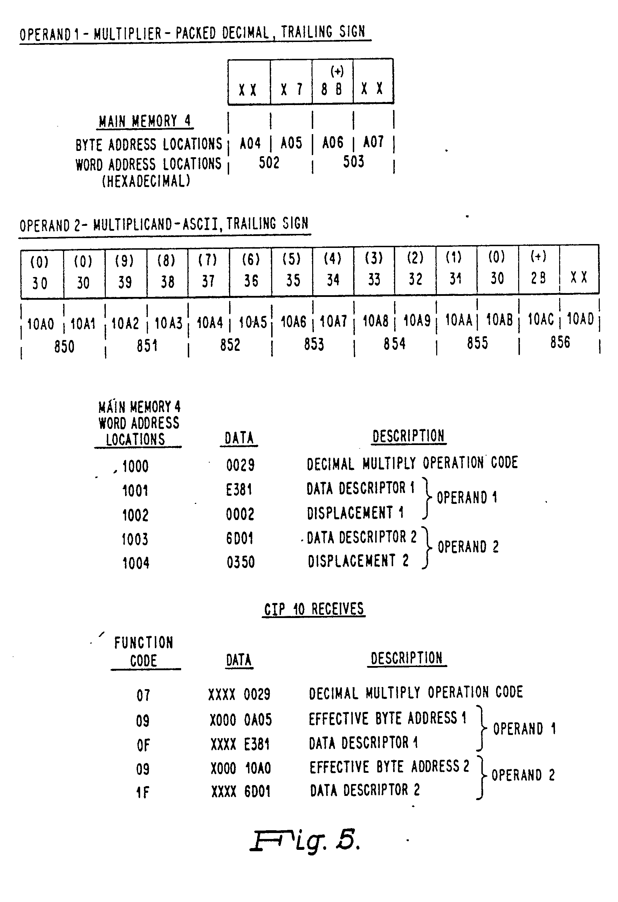

Referring to Figure 5, for the example operand 1, the multiplier is stored in word address locations hexadecimal 0502 and 0503 of main memory 4. The two multiplier digits are stored in byte addresses hexadecimal 0A05 and 0A06. The byte address is generated by appending a binary ZERO to the right of the word address for addressing the left hand byte, and appending a binary ONE to the right of the word address for addressing the right hand byte of the word.

Operand 2, the multiplicand, is stored in word locations hexadecimal 850 through 856 or byte locations hexadecimal 10A0 through 10AC of main memory 4. Note that for this example the multiplicand is stored as ASCII numeric characters.

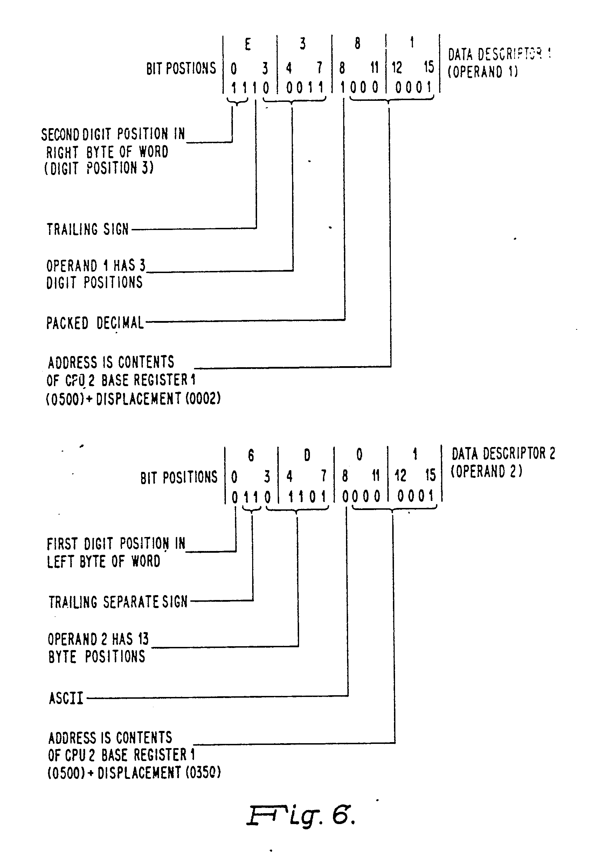

The decimal operation code hexadecimal 0029 is stored in main memory of location hexadecimal 1000. Operand 1, the multiplier, is defined by the data descriptor 1, Figure 6, hexadecimal E381, stored in location hexadecimal 1001. Data descriptor 1 indicates that operand 1 starts at a main memroy 4 location hexadecimal 502 which is generated by adding the contents of CPU 2 register B1 (not shown and assumed to contain hexadecimal 500), to a displacement, hexadecimal 0002, stored in main memory 4 location hexadecimal 1002. Operand 2, the multiplicand, is defined by the data descriptor 2, hexadecimal 6D01, stored in main memory 4 location hexadecimal 1003. Data descriptor 2 indicates that operand 2 starts at location hexadecimal 850 which is generated in CPU 2 by adding the contents of CPU 2 register B1 (not shown) to the displacement, hexadecimal 350, stored in location 1004.

Under CPU 2 control, information derived from the contents of location hexadecimal 1000 through 1004 are transferred to the CIP 10 and stored in RFC 82-1 locations. The function codes are transferred from the CPU 2 and stored in function code register 96, Figure 2. Function code hexadecimal 07 defines the double word received from main memory 4 as an instruction word, function code 09 as an effective byte address, function code 0F as the data descriptor and function code 1F as the last data descriptor. Note that the base address, hexadecimal 500, from CPU 2 register B1 (not shown) is modified in CPU 2 by the displacement to generate the effective byte address:

Referring to Figure 6, the data descriptors define the characteristics of the operands. The data descriptor is made up of 16 binary bits usually represented by 4 hexadecimal digits.

For the example, operand 1 was selected as packed decimal, that is, two decimal digits per byte; and operand 2 was selected as string decimal, one ASCII character per byte. Bit position 8 indicates that operand 1 contains packed decimal digits and operand 2 contains ASCII characters.

Each word includes 2 byte positions. Bit positions 0 and 1 of data descriptor 1 identify the location in the word of the first character in operand 1. Here binary bit 0 at binary ONE identifies the first character as being in the right hand byte of the word and binary bit 1 at binary ONE identifies the first character as being in the right hand portion of the byte. Referring to Figure 5, the hexadecimal digit 7 of operand 1 is in the fourth location of word address hexadecimal 502 (byte address hexadecimal A05).

A binary ZERO in bit position 0 of data descriptor 2 identifies the first character as being in the left hand byte position, byte address location hexadecimal 10A0 of word address location hexadecimal 850.

Bit position 2 at binary ONE of data descriptor 1 and bit positions 1 and 2 at binary ONE of data derscriptor 2 identify both operands as having trailing signs.

Bit positions 3 through 7 indicate that operand 1 is 3 4-bit characters long and operand 2 is 13 8-bit characters long.

Bit positions 9 through 15 identify the way CPU 2 will calculate the word address location in main memory 4 which contains the first character. The binary ONE in bit position 15 and binary ZERO's in bit positions 9 through 14 indicate that the CPU 2 will add the displacement from the word following the descriptor (Fiugre 5) to the contents of CPU 2 base register 1 (not shown), hexadecimal 500, to indicate that operands 1 and 2 start at word address hexadecimal 502 and 850 respectively.

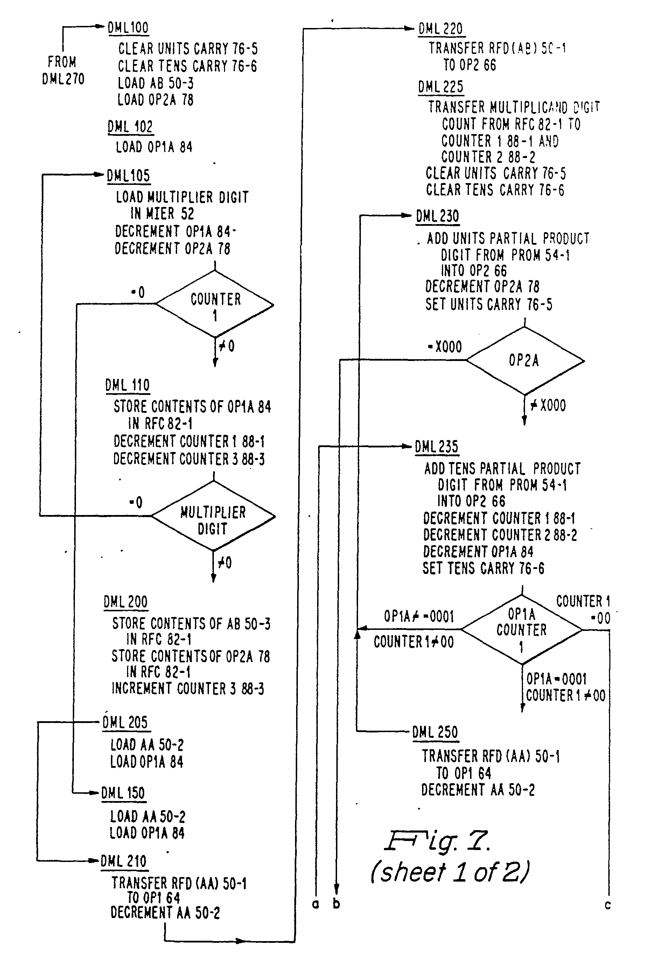

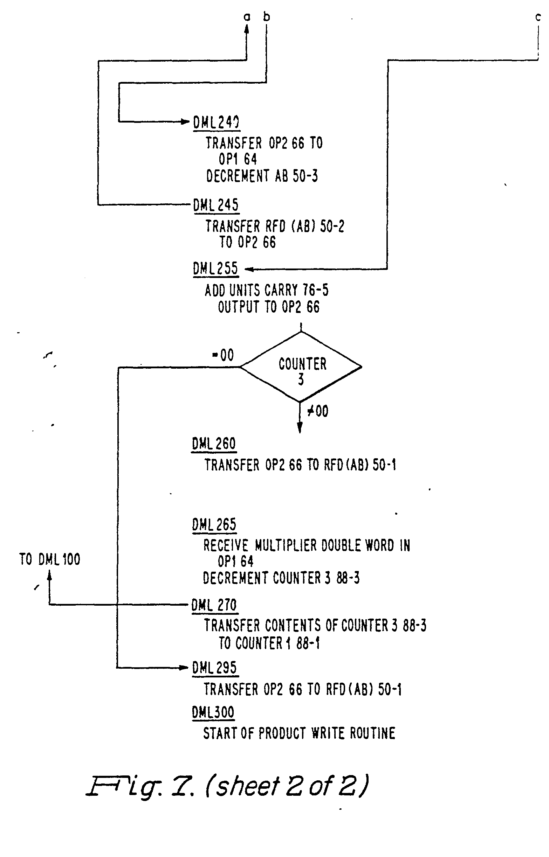

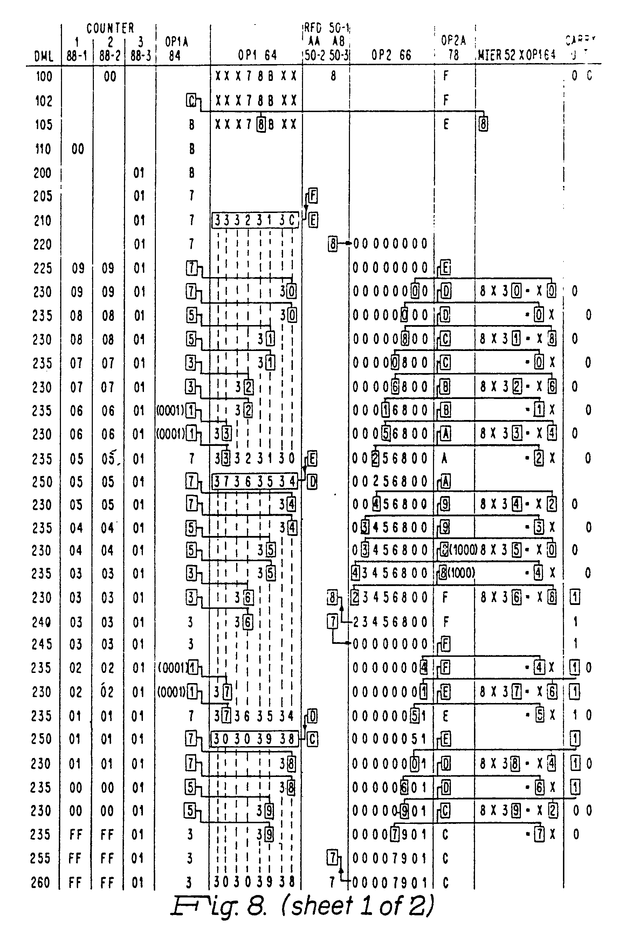

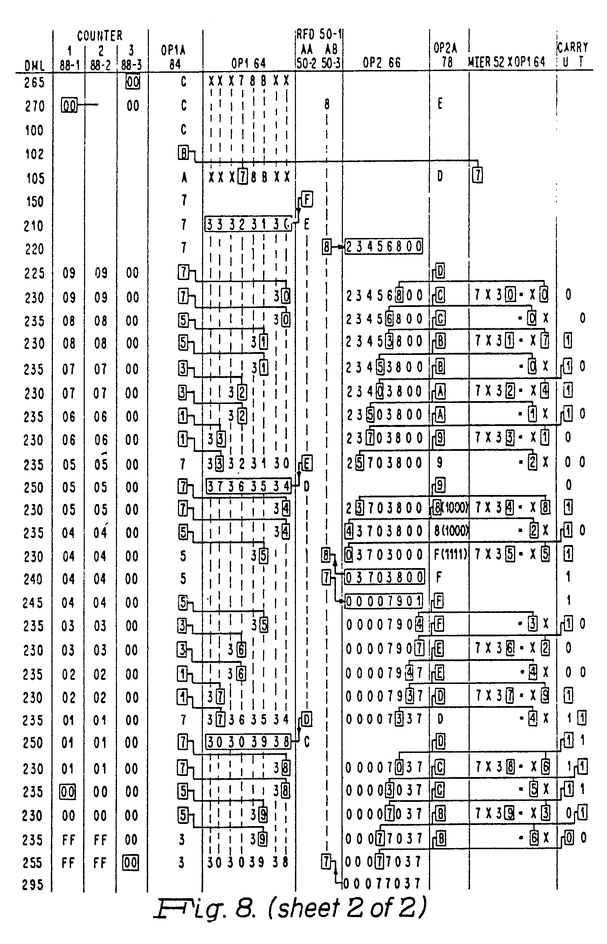

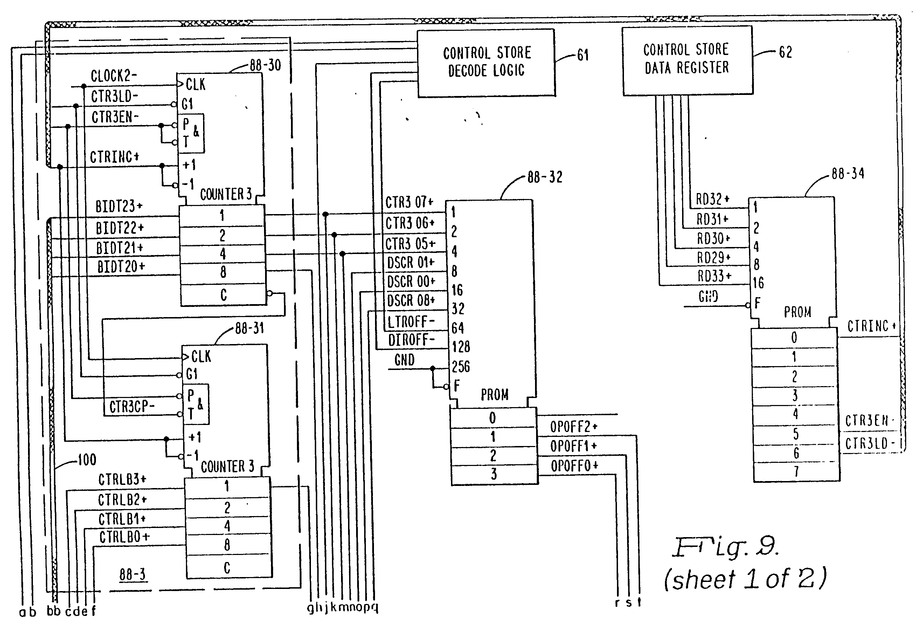

Figure 7 shows the functions performed by specific logic blocks controlled by signal RD 00—67+ configurations. Figure 8 shows the contents of the registers and counters after each of the detailed steps in performing the sample multiplication.

The multiplicand is stored in locations hexadecimal D, E, F and 0 of RFD 50-1 and locations hexadecimal 1 through 8 are cleared to hexadecimal ZERO in preparation for storing the partial products.

Initially, the multiplier double word XXX7 8BXX was received by an INR register (not shown) in common bus data interface 80 and transferred to OP1 64. The multiplier double word also remains in register INR for the decimal multiply operation.

In DML 100, units carry 76-5 and tens carry 76-6 are cleared to binary ZERO. Register/counter AB 50-3 is loaded with hexadecimal 8, the address in RFD 50-1 of the least significant digits of the product. OP2A 78 is loaded with hexadecimal F to point to bit positions 28—31 of OP2 66, the location of the sign character of the product.

In DML 102, OP1A 84 is loaded with hexadecimal C to point to bit positions 16—19 of OP1 64 the location in which digit "8" of the multiplier is stored.

In DML 105, the digit 8 is transferred to register/counter 52-1, Figure 4, and OP1A 84 is decremented to hexadecimal B to point to the multiplier digit 7 in OP1 64. OP2A is decremented to hexadecimal E, the location of the least significant numeric digit of the product.

In DML10, the contents of OP1A 84, hexadecimal B, the location of the next multiplier digit, are stored in RFC 82-1; counter 1 88-1 is decremented to hexadecimal 00. If the multiplier digit stored in register/counter 52-1 has been a hexadecimal 0 instead of the 8 assumed in this example, then the logic branches to DML 105 to transfer the next multiplier digit from OP1 64 to register/counter 52-1 and shifts the partial product starting point one digit to the left by decrementing OP2A 78. (Other multiply control words, not shown, read additional double words of the multiplier if OP1A 84 wraps around the decrements AB if OP2A 78 wraps around).

In DML 200, the contents of AB 50-3, hexadecimal 8, and the contents of OP2A 78, hexadecimal E, are stored temporarily in RFC 82-1 for later retrieval. Counter 3 88-3 is incremented to show the number of multiplier digits remaining for transfer to MIER 52.

In DML 205, AA 50-2 is loaded with hexadecimal F, the address in RFD 50-1 of the least significant double word 33323130 of the multiplicand. OP1A 84 is loaded with hexadecimal 7, which was previously stored in RFC 82-1. Hexadecimal 7 in OP1A 84 points to the least significant byte position in OP1 64, hexadecimal 30.

In DML 210, the contents of location hexadecimal F of RFD 50-1, hexadecimal 33323130, are transferred to OP1 64. AA 50-2 is decremented to hexadecimal E, the address of the next double word of the multiplicand in RFD 50-1.

9

In DML 220, the contents of address hexadecimal 8 of RFD 50-1, hexadecimal 0000 0000 is transferred to OP2 66 to clear OP2 66.

In DML 225, the count of the number of significant multiplicand digits, hexadecimal 09, is transferred from RFC 82-1 to counter 1 88-1 and counter 2 88-2. The units carry 76-5 and the tens carry 76-6 are cleared.

The development of the partial products are carried out in DML 230 and DML 235. In DML 230, the units partial product digit from PROM 54-1 is added to the digit stored in OP2 66 at the position stored in OP2A 78 and the sum stored back in OP2 66 at that position. If the units carry 76-5 is set, then a binary ONE is added during the ALU1 76-2 add cycle via the carry in signal in Figure 3. If there is a carry out, then units carry 76-5 is set. OP2A 78 is decremented by 2 to point to the next higher order partial product position in OP2 66.

In DML 235, the tens partial product digit from PROM 54-1 is added to the digit stored in OP2 66 at the position stored in OP2A 78 (one less than in DML 230) and the sum stored back in OP2 66 at this position. If the tens carry 76-6 is set, then a binary ONE is added during the ALU1 76-2 add cycle via the carry in signal in Figure 3. If a carry results, then the tens carry 76-6 is set. Note that a tens partial product digit is developed followed by a units partial product digit with OP2A 78 pointing to the same OP2 66 digit position.

When in DML 235, decrementing OP1A 84 from binary 0001 to binary (0)111 indicates that the last multiplicand digit in OP1 64 is being processed. After the tens digit is processed in DML 235, counter 1 88-1 is tested. If counter 1 88-1 does not equal hexadecimal 00 indicating that additional multiplicand digits are stored in RFD 50-1 and the last digit in OP1 64 is being processed, then a branch to DML 250 is made to transfer the next double word 37363534 from location hexadecimal E of RFD 50-1 to OP1 64. AA 50-2 is decremented to hexadecimal D, the location of the next higher order double word of the multiplicand. Since the multiplicand is in the string decimal form, OP1A 84 is decremented by 2. Subtracting 2 from binary (0)001 gives binary (0)111 since the OP1TYP bit is not involved in the incrementing or decrementing calculations. If the multilicand were packed decimal, OP1A 84 would have been decremented by 1. OP1A 84 would contain hexadecimal 8 indicating packed decimal and the high order digit of OP1 64. Subtracting one again would give (1)111 or hexadecimal F.

During DML 230, the contents of OP2A 78 are tested for binary X000 indicating that the partial product which is always in packed decimal form has filled OP2 66. After DML 230 is processed, a branch to DML 240 is made and the partial product hexadecimal 23456800 is transferred to location hexadecimal 8 of RFD 50-1 and AA 50-2 is decremented to hexadecimal 7. In DML 245, the contents of location hexadecimal 7, hexadecimal 00000000, are transferred to OP2 66 and a branch to DML 235 is made to continue the development of the partial product using the multiplier digit 8.

Again when OP1A 84 is decremented from binary 0001, a branch to DML 250 is made and the last double word of the multiplicand hexadecimal 30303938 is transferred from location hexadecimal D of RFD 50-1 to OP1 64. A branch is made to DML 230 to continue the partial product development with multiplier digit 8.

During DML 235, counter 1 88-1 is tested for hexadecimal 00 indicating that all of the multilicand digits were processed and a branch is made in DML 255 to add the last units carry to OP2 66 if units carry 76-5 was set.

In DML 260, the partial product in OP2 66 is transferred to location hexadecimal 7 of RFD 50-1.

In DML 265, the multiplier double word xxx78Bxx is restored in OP1 64 from the common bus data interface 80 and counter 3 88-3 is decremented to hexadecimal 00 indicating that the last multiplier digit is to be processed.

In DML 270, the contents of counter 3 88-3, hexadecimal 00, are transferred to counter 1 88-1 and a branch to DML 100 is made and the above operation repeated for a multiplier digit 7. (Note that the first partial product digit used is one digit to the left of the one used for the multiplier digit 8.)

Now when DML 255 is processed, the contents of counter 3 88-3 are tested and found to be hexadecimal 00 indicating that the multiplication is completed since all the multiplier digits were processed.

A branch is made to DML 295 where the partial product stored in OP2 66 is transferred to location hexadecimal 7 and DML 300 is called as a routine to write the product into main memory 4.

The data descriptors define the characteristics of the operands. Figure 5 includes the data descriptors which define operand, the multiplier and operand 2, and the multiplicand of the decimal multiply instruction. Figure 6 describes the functions performed by the data descriptor bits.

The data descriptors are received by CIP 10 from main memory 4 and stored in RFC 82-1 in bit positions 8 through 23. The output of RFC 82-1, signals RFC A-23+, is applied to MUX 76-11 and when selected are applied to BI bus 100 signals BIDT 07—31+ of Figure 3.

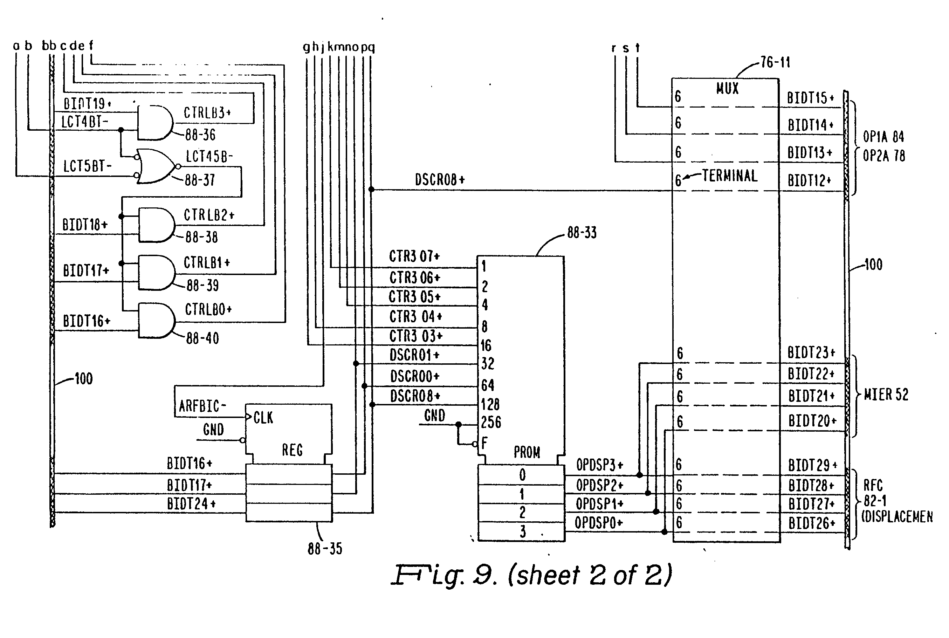

Referring to Figure 9, during the processing of the data descriptors, a DSCR register 88—35 stores a copy of the data descriptor currently being processed. Bit position 8 of the data descriptor and DSCR 88—35 in Figure 6 identifies the operand as packed decimal if a binary ONE and ASCII if a binary ZERO. The DSCR 88—35 also stores in bit positions 0 and 1 an indication of the position of the high order character within the high order word for a packed decimal operand or the position of the high order byte in the high order word for an ASCII operand.

# 0 055 128

## TABLE 1

| Position of high order character | DSCR | | | |
|---|---|---|---|---|
| | 00+ | 01+ | 08+ | |
| Position 0 of high order word | 0 | 0 | 1 | Packed decimal |
| Position 1 of high order word | 0 | 1 | 1 | Packed decimal |
| Position 2 of high order word | 1 | 0 | 1 | Packed decimal |
| Position 3 of high order word | 1 | 1 | 1 | Packed decimal |
| Left byte | 0 | | 0 | String decimal |
| Right byte | 1 | | 0 | String decimal |

Table 1 identifies the operand characteristics from the data descriptor bit positions 0, 1 and 8 configuration.

Data descriptor bit positions 3 through 7 store the operand length; that is, the number of characters in the operand including the sign character. This value is transferred to counter 3 88-30 and 88-31 unless value is 0 in which case a value in a CPU 2 register is sent to CIP 10 and is eventually stored in counter 3. Bit positions 3 through 7 are stored in bit positions 11 through 15 of RFC 82-1, transferred to MUX 76-11 via signals RFC 11—15+ and appear on BI bus 100 as signals BIDT 19—23+ for loading into counter 3 88-30 and 88-31.

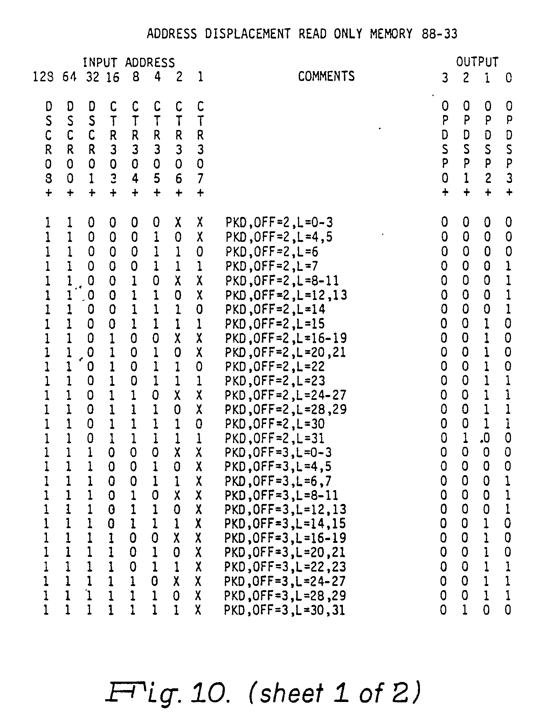

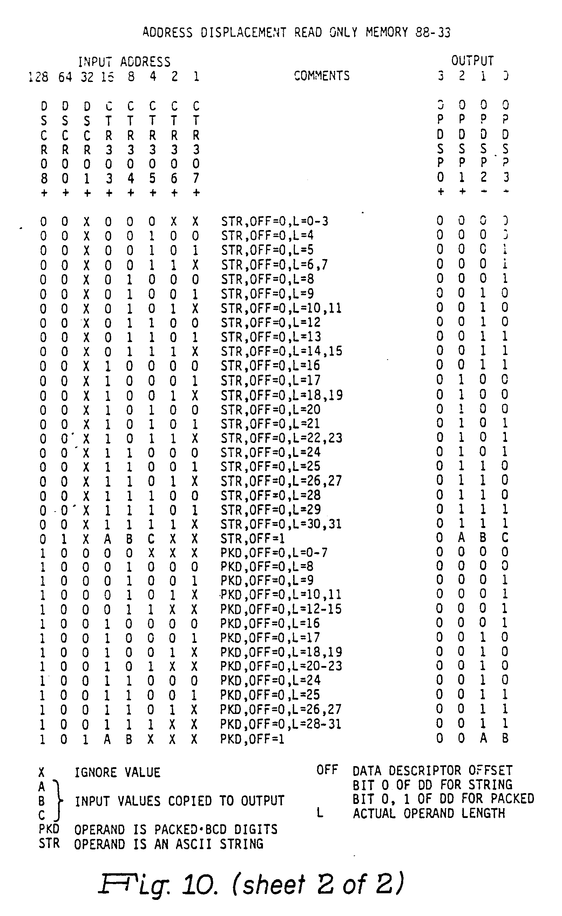

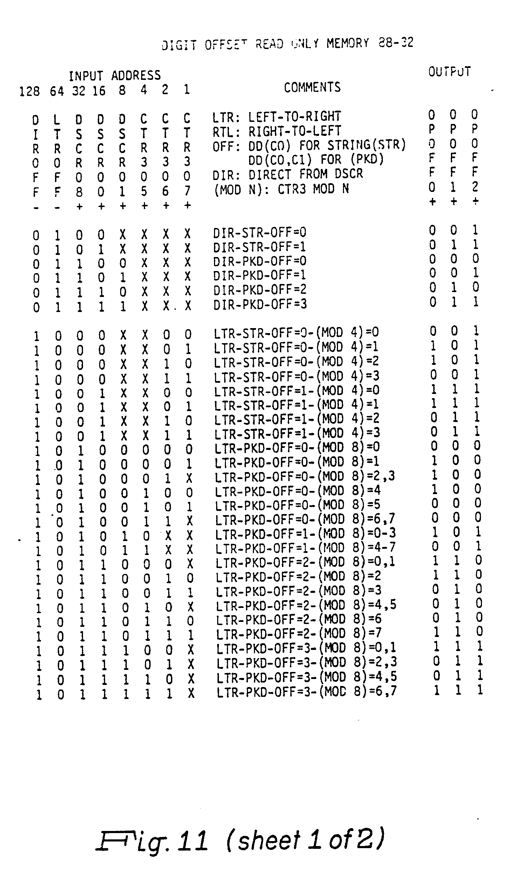

The output of DSCR 88-35, signals DSCR 00, 01 and 08+, and the output of counter 3 88-30 and 88-31, signals CTR3 03—07+, are applied to a digit offset PROM 88-32 and an address displacement PROM 88-33. The contents of PROM's 88-32 and 88-33 are shown in Figures 11 and 10 respectively.

DSCR 88-35 is loaded under the control of signal ARFBIC— from control store decode logic 61. A signal LCT4BT— at logical ONE is applied to an AND gate 88-36. The output signal CTRLB3+ is loaded into counter 3 88-31. A signal LCT5BT— at logical ZERO applied to a negative OR gate 88-37 forces output signal LCT45B— to logical ZERO masking out signals BIDT 16—18+ applied to AND gates 88-38, 88-39 and 88-40 respectively. This forces signals CTRIB 0—2+ to logical ZERO, thereby removing the control field (bits 0, 1 and 2) from the length.

Figure 10 shows the binary bit layout of the PROM 88-33. Signal DSCR 08+ at binary ZERO identifies the operand as string decimal, that is 2 eight bit bytes per word as shown in Figure 5. Signals CTR3 03—07+ identify the character length of the operand including sign. Signal DSCR 00+ being a binary ZERO indicates an offset of zero (when the high order character is stored in the left byte position of the word). The output signals OPDSP 0—3+ always indicate a value which is one less than the number of double words in main memory 4 in which at least part of the operand is stored. For example, for a string decimal operand of 13 decimal digits with a zero offset, the PROM 88-33 output signals OPDSP 0—3+ indicate a hexadecimal 3 indicating that the operand is stored in main memory 4 in 4 double words. Additionally, the hexadecimal 3 may be combined with the effective address stored in RFC 82-1 to calculate the main memory 4 address of the least significant word or double word of the operand. (The CIP 10 may request via the C/MMU 12 the transfer to the CIP 10 of any word (SINGLE READ) or a double word starting at any word boundary (DOUBLE READ)).

If the offset of the string decimal operand is one as indicated by signal DSCR 00+ being a binary ONE, that is, the high order character is in the right byte position of the word, then the signals CTR3 03—05+ equal to output signals OPDSP 1—3+. For a length of 13 characters as indicated by signals CTR3 03—07+, the binary configuration is 01101, making the output signals OPDSP 0—3+ a hexadecimal 3 (0011). (This would be the case if the second operand in Figure 5 was shifted right one byte.)

A packed decimal operand is identified by signal DSCR 08+ at binary ONE. Here the offset is indicated by signals DSCR 00+ and DSCR 01+. A packed decimal operand of length 16 is stored in 2 double words in main memory 4 for an offset of zero, therefore signals OPDSP 0—3+ are at hexadecimal 1 and is stored in 3 double words for an offset of one to three, in which case signals OPDSP 0—3+ are at hexadecimal 2.

Figure 11 shows the layout of PROM 88-32. The PROM 88-32 stores signals which indirectly control the reading of single words and double words from main memory 4. During such instructions as alphanumeric compare and alphanumeric move, the operand is read from memory high order word first. Depending upon the operand length, data type and descriptor offset, the first read cycle from main memory 4 will call for a single word or a double word, then subsequently if necessary double words. The PROM 88-32 output signals OPOFF 0—2+ are stored in OP1A 84 and/or OP2A 78. Signal OPOFF 0+ is applied via OP1A 84 or OP2A 78 signal OP1AD 0+ or OP2AD 0+ respectively to control store addressing logic 58 to choose between control words which initiate a one or two word read from main memory 4. The signals OPOFF 0—2+ point to the most significant character of the operand for a left-to-right read from main memory 4 or

11

the least significant character of the operand for a right-to-left read. In some instructions, the signals OPOFF 0—2+ may point to the sign positions of the operands to enable an examination of the sign characters.

The PROM 88-33 stores signals which indicate one double word less than the number of double words in the operand (multiplier in the case of a decimal multiply instruction). These signals are also used by the RFC 82-1 to compute the address in main memory 4 of the least significant word or double word in the operand. PROM 88-33 output signals OPDSP 0—3+ are applied to MUX 76-11 and appear as BI bus 100 signals BIDT 20—23+ for storage in MIER 52 and may also appear as signals BIDT 26—29+ with signals BIDT 24, 25, 30, and 31 at binary ZERO for modifying the operand effective byte addresses in RFC 82-1 which identifies the main memory 4 byte containing the most significant character. The signals BIDT 24—31+ are added to the effective byte address to generate the optimal main memory 4 address location that may be used to read the least significant decimal digit of the operand.

Signal DIROFF— at logical ZERO applied to an input address 128 causes signals OPOFF 0—2+ to indicate the position of OP1 64 or OP2 66 of the high order byte in a string operand or the high order digit in a packed decimal operand without considering operand length (the high order character will be at in the left half of OP1 64 or OP2 66).

As an example from PROM 88-32, Figure 11, signals DIROFF—, LTROFF—, DSCR08+ and DSCR00+ at binary 0100 respectively indicate a string decimal operand with an offset of ZERO. The output signals OPOFF 0—2+ at binary 001 applied to OP1A 84 or OP2A 78 select the left byte of the high order word stored in OP1 64 or OP2 66 respectively (a hardware requirement is that OP1A 84 or OP2A 78 select the odd numbered digit of a byte).

Signals DIROFF—, LTROFF—, DSCR 08+, DSCR 00+ and DSCR 01+ at binary 01110 respectively indicate a packed decimal operand with an offset of 2. The output signals OPOFF 0—2+ at binary 010 indicate that the selected digit is in digit position 2 or the third digit position of the four digit positions in the high order word stored in OP1 64 or OP2 66.

Signal DIROFF— at logical ONE and signal LTROFF— at logical ZERO indicate that operand words are received from main memory 4 high order word first (left-to-right). Signal DIROFF— at logical ONE and signal LTROFF— at logical ONE indicate a right-to-left transfer from main memory 4.

As an example, assume signals DIROFF—, LTROFF—, DSCR 08+, DSCR 00+, DSCR 01+, CTR3 05+, CTR3 06+, and CTR3 07+ are binary 10110111 respectively indicating a left-to-right transfer, a packed decimal operand and an offset of 2 for lengths 7, 15, 23 or 31 (Length mod 8=7). Signals OPOFF 0—2+ at binary 110 indicate that OP1A 84 or OP2A 78 will point to digit position 6 of words 7, 15, 23 or 31. Digit position 6 is in the right hand word position of a double word. Signal OPOFF 0+ at logical ONE also indicates that the first transfer from main memory 4 is a single word transfer.

Assume signals DIROFF—, LTROFF—, DSCR 08+, DSCR 00+, CTR3 06+ and CTR3 07+ are binary 110110 indicating a right-to-left transfer, a string decimal operand, an offset of one for the operand lengths 2, 6, 10, 14, 18, 22, 26 and 30 (mod 4=2), then signals OPOFF 0—2+ are at binary 101 indicating the selection of the left byte of the right word. Signal OPOFF 0+ at logical ONE indicates that the first transfer is a double word transfer from main memory 4.

The selection of the first read from main memory 4 as a single or double word enables the OP1A 84 and OP2A 78 pointers to be incremented (or decremented) in a continuous fashion as subsequent characters are processed and subsequent double words are received from main memory 4.

A PROM 88-34 generates signal CTRINC+ to increment, signal CTR3LD— to load, and signal CTR3EN— to enable counter 3 88-30 and 88-31. Also, the carry signal CTR3CP— together with signal CTR3OP— enables counter 3 88-31. The PROM 88-34 locations are selected by signals RD 29—33+ from control store data register 62.

The Boolean equations for the following signals from control store decode logic 61 are:

$$LCT4BT-=[\overline{RD08} \cdot \overline{RD09} \cdot \overline{RD10} \cdot \overline{RD11} \cdot RD16 \cdot RD17 \cdot \overline{RD18} \cdot \overline{RD19}]$$
$$LCT5BT-=[\overline{RD08} \cdot \overline{RD09} \cdot \overline{RD10} \cdot \overline{RD11} \cdot RD16 \cdot RD17 \cdot \overline{RD18} \cdot RD19]$$
$$LTROFF-=[\overline{RD08} \cdot \overline{RD09} \cdot \overline{RD10} \cdot \overline{RD11} \cdot RD20 \cdot RD21 \cdot \overline{RD22} \cdot \overline{RD23}]$$
$$ARFBIC-=[\overline{RD08} \cdot \overline{RD09} \cdot \overline{RD10} \cdot \overline{RD11} \cdot RD20 \cdot RD21 \cdot \overline{RD22} \cdot \overline{RD23}]$$

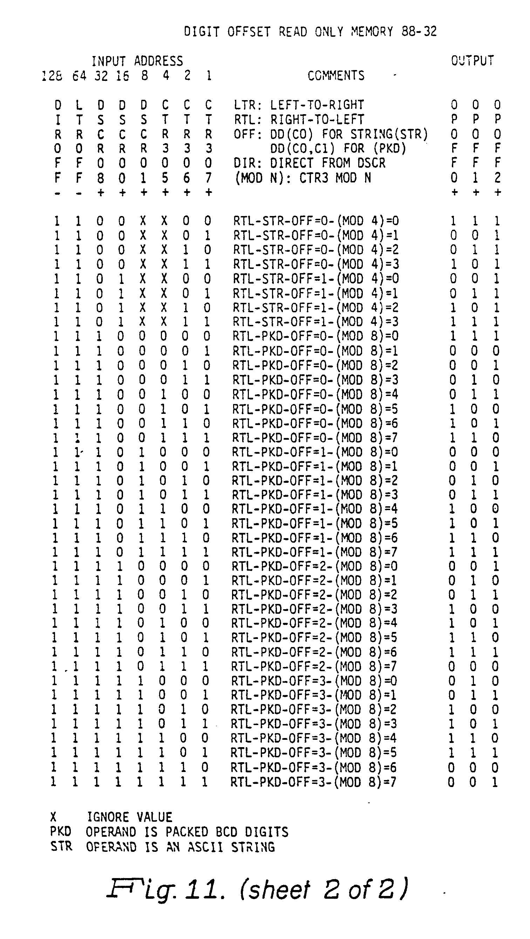

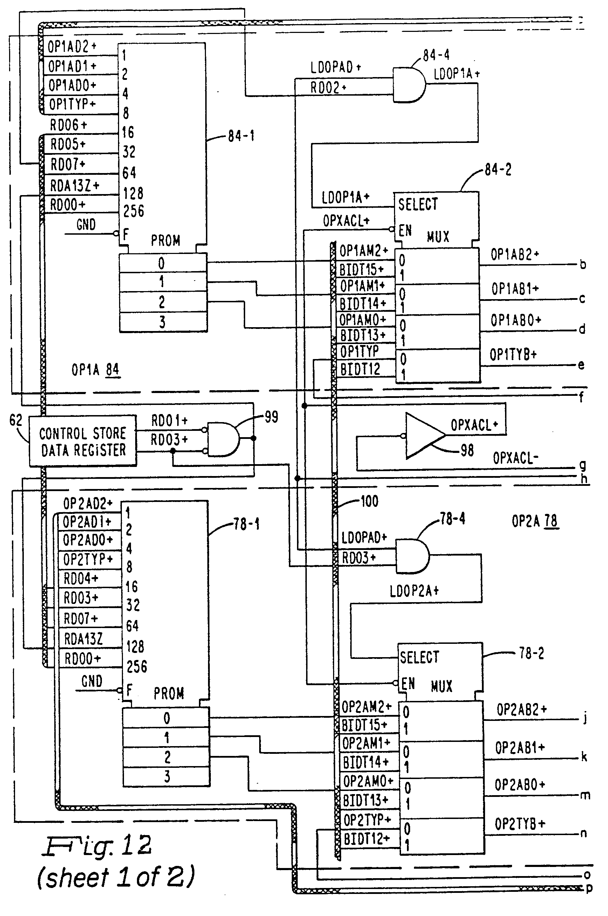

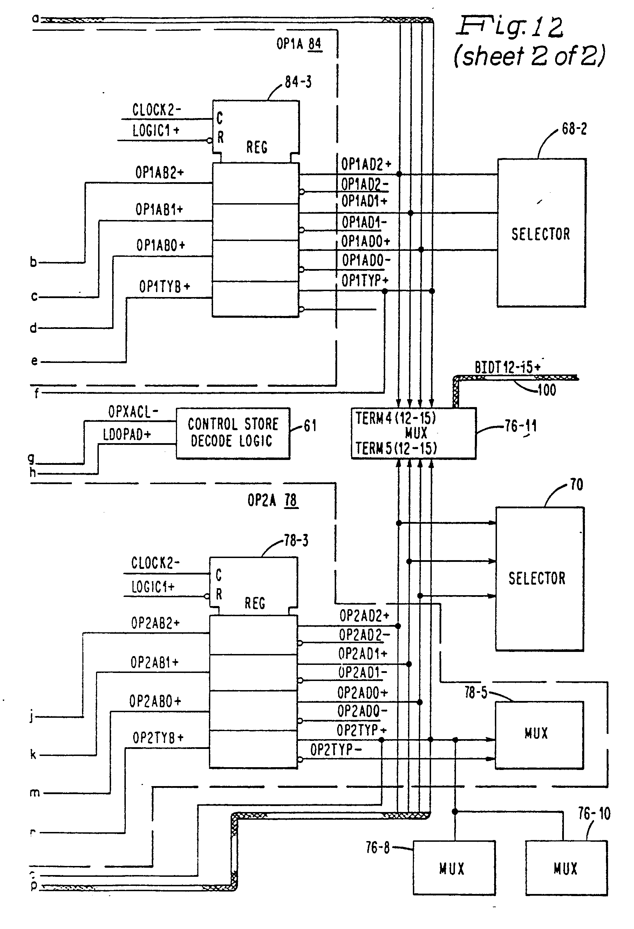

Referring to Figure 12, OP1A 84 includes an increment/decrement read only memory (PROM) 84-1, a MUX 84-2 coupled to a register 84-3 via signals OP1AB 0—2+ and OP1TYB+ which is in turn coupled to selector 68 and MUX 76-11 via signals OP1AD 0—2+ and OP1TYP+.

Signals OP1AD 0—2+ applied to selector 68 select a decimal digit stored in OP1 64 for transfer to MIER 52 during the DML 105 cycle as shown in Figures 7 and 8. Also during the DML 230 and DML 235 cycles, signals OP1AD 0—2+ applied to selector 68 select a decimal digit from OP1 64 which is applied to multiply PROM 54 via signals OP1DG 0—3+.

Signals OP1AD 0—2+ and OP1TYP+ are stored in RFC 82-1 via MUX 76-11 and BI bus 100 signals BIDT 12—15+ for later reloading into OP1A 84 or OP2A 78 via MUX 84-2 and register 84-3. The signal OP1TYP+ at logical ZERO identifies the operand as having 8 bit characters and at logical ONE identifies the operand as having 4 bit characters. Note in Figure 8 that OP1A 84 stored hexadecimal C and B when selecting the multiplier digits since the multiplier is made up of 4 bit characters, and stores hexadecimal 1, 3, 5 and 7 (if multiplier had been 8 or more digits, values of 8 to F would have appeared in OP1A 84 during multiplier

12

digits selection) when selecting the multiplicand digits since the multiplicand is made up of 8 bit characters (ABCII).

Signals OP1AD 0—2+; OP1TYP+; RD00, 05—07+ and RDA13Z+ are applied to the input address terminals of PROM 84-1. Signals RD00, 05—07+ and RDA13Z+ result in the PROM 84-1 output signals OP1AM 0—2+ to have the same hexadecimal value of input address signals OP1AD 0—2+; a value incremented by hexadecimal 1, 2 or 4 or decremented by hexadecimal 1, 2 or 4. The OP1TYP+ signal applied to PROM 84-1 may result, depending on the RD signals, in the input address signals OP1AD 0—2+ being incremented or decremented by hexadecimal 1 or 2. Note when processing the packed decimal multiplier, OP1A 84 is decremented by 1 in Figure 8 and when processing the multiplicand, OP1A 84 is decremented by 2.

MUX 84-2 is enabled by signal OPXACL— from control store decode logic 61 via an inverter 98 and signal OPXACL+. The output signals OP1AM 0—2+ from PROM 84-1 or signals BIDT 12—15+ from BI bus 100 are selected by signal LDOP1A+, the output of an AND gate 84-4. The inputs to AND gate 84-4 are signal LDOPAD+ from control store decode logic 61 and signal RD02+ from control store data register 62.

Signal RDA13Z+ is generated by a NAND gate 99 with input signals RD01+ and RD03+ from control store data register 62.

The OP2A 78 logic elements increment/decrement PROM 78-1, MUX 78-2, register 78-3, and AND gate 78-4 operate in a similar manner to the logic elements PROM 84.1, MUX 84.2, register 84-3 and AND gate 84-4 except signals RD04+ and RD03+ are appliedd to the input address terminals 16 and 32 respectively of PROM 78-1, signals RD06+ and RD05+ are appled to the input address terminals 16 and 32 of PROM 84-1, and signal RD02+ is applied to the input of AND gate 84-4 while signal RD03+ is applied to the input of AND gate 78-4.

Signals OP2TYP+ and OP2TYP— are applied to the input terminals of a MUX 78-5 of the write control logic portion of OP2A 78 which determines whether a digit, a byte of a double word is loaded into OP2 66.

Under control of signals RD 08—11+ and OP2TYP+, MUX 76-10 is enabled when signal OP2TYP+ is at logical ZERO to transfer the zone character signals ALUZN 0—3+ from ALU2 76-3 to BI bus 100 via MUX 76-11. When signal OP2TYP+ is at logical ONE, MUX 76-8 is enabled to transfer the digit signals ALUDG 0—3+ to BI bus 100 via MUX 76-11. As shown in Figure 8, OP2A 78 signals OP2AD 0—2+ with signal OP2TYP+ at logical ONE, indicating 4 bit characters, in OP2 66 is decremented by hexadecimal ONE.

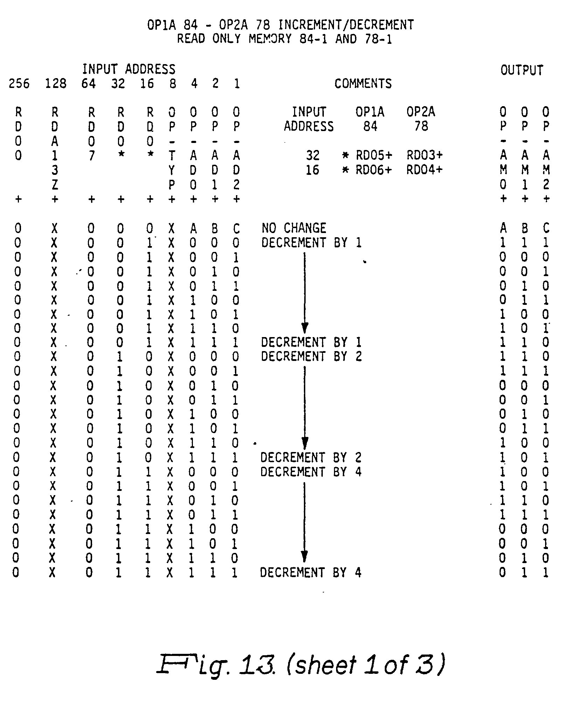

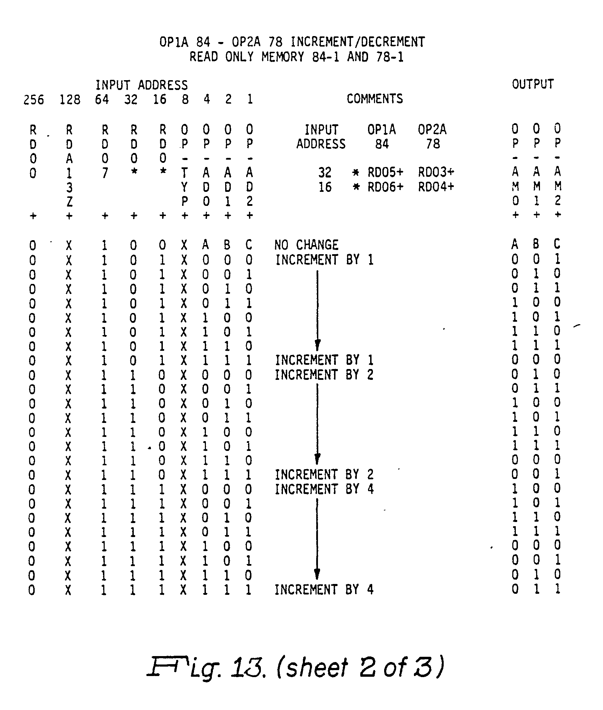

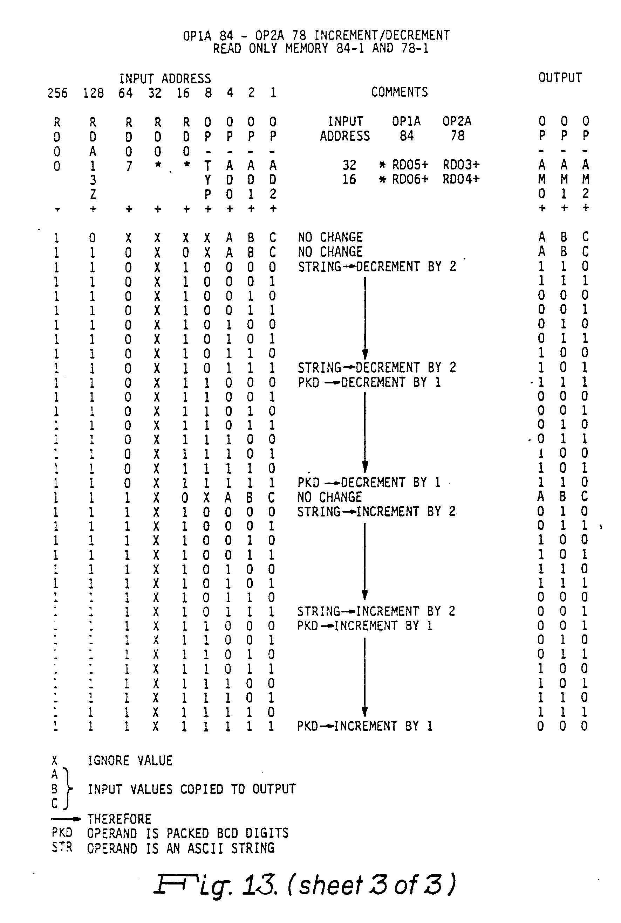

Figure 13 shows the layout of increment/decrement PROM's 84-1 and 78-1 of OP1A 84 and OP2A 78 respectively. Input adder signals OP-AD 0—2+ are incremented or decremented to generate output signals OP-AM 0—2+ where — equals 1 for OP1A 84 and — equals 2 for OP2A 78. Note that signals RD05+ and RD06+ are applied to input address terminals 32 and 16 respectively for PROM 84-1, and signals RD03+ and RD04+ are applied to input address terminals 32 and 16 respectively for PROM 78-1.

For OP1A 84, signals RD00+, RD05+ and RD07+ at logical ZERO and signal RD06+ at logical ONE decrement signals OP1AD 0—2+ by ONE to generate signals OP1AM 0—2+. Signals RD00+, RD06+ and RD07+ at logical ZERO and signal RD05+ at logical ONE decrement signals OP1AD 0—2+ by TWO to generate signals OP1AM 0—2+.

Signals RD00+ and RD07+ at logical ZERO and signals RD05+ and RD06+ at logical ONE decrement signals OP1AD 0—2+ by FOUR to generate signals OP1AM 0—2+.

Signals OP1AD 0—2+ are incremented by ONE, TWO and FOUR in a similar manner when signal RD07+ is at logical ONE.

Signals RD00+, RD06+ and RDA13Z at logical ONE and RD07+ at logical ZERO decrement the string operand position by TWO when signal OP1TYP+ is at logical ZERO and decrement the packed decimal operand position by ONE when signal OP1TYP+ is at logical ONE. Signal RD07+ at logical ONE results in the string decimal operand position being incremented by TWO when signal OP1TYP+ is at logical ZERO, and the packed decimal operand position being incremented by ONE when signal OP1TYP+ is at logical ONE.

This is shown in Figure 8 where the contents of OP1A 84 are decremented by TWO to select decimal digits to the exclusion of the zone bits in the string deicmal multiplicand.

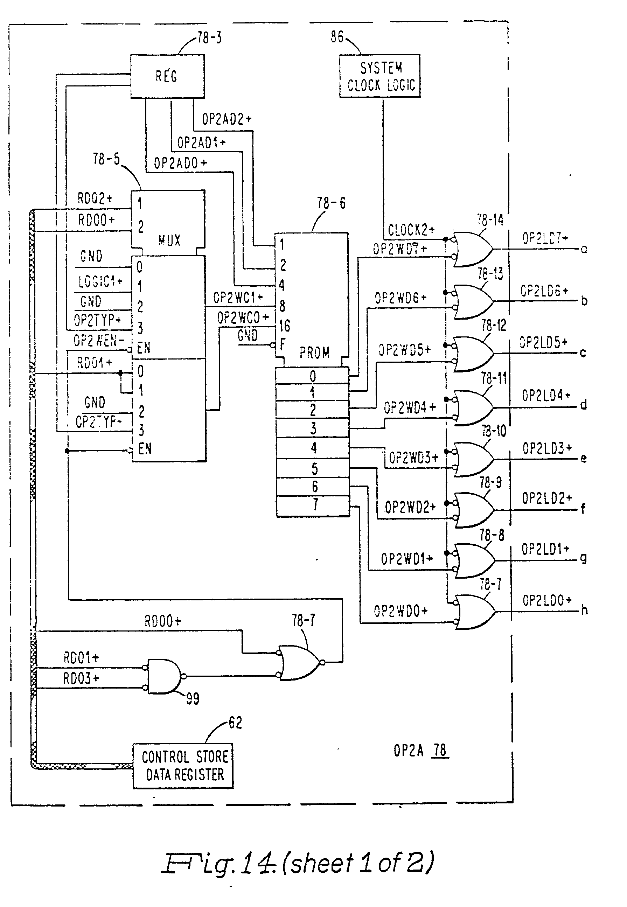

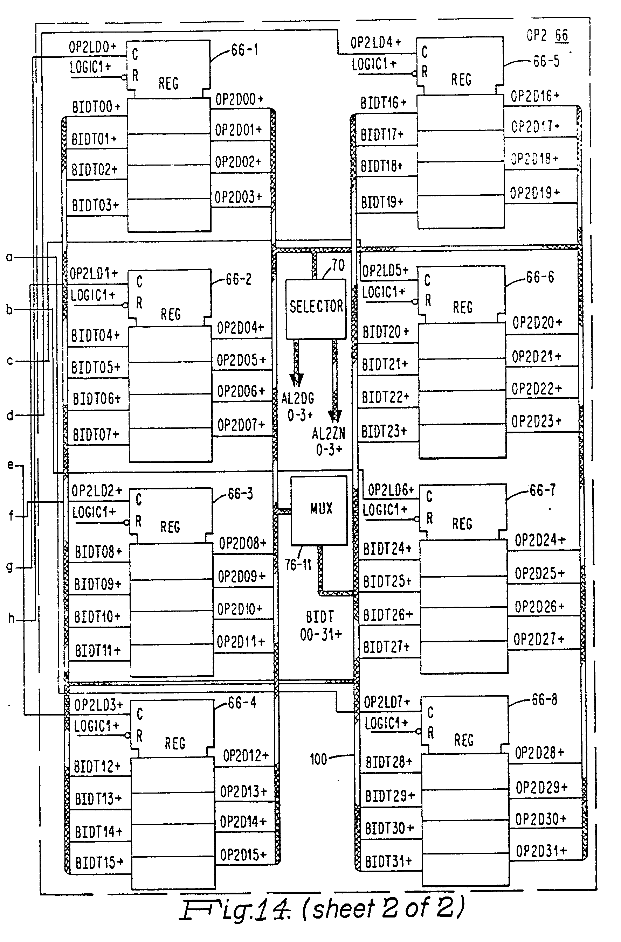

Referring to Figure 14, OP2 66 includes registers 66-1 through 66-8 which generate output signals OP2D 00—31+. Each digit of OP2 66 is separately loadable from its corresponding digit signals of BIDT 0—31+ BI bus 100 at the fall of clock signal CLOCK2+ if the corresponding signal OP2WD 0—7+ is at logical ONE. This is accomplished by signals OP2WD 0—7+ being applied to NOR gates 78-7 through 78-14 where they are combined with signal CLOCK2+ to generate signals OP2LD 0—7. A read only memory (PROM) 78-6 generates signals OP2WD 0—7+.

Register 78-3 in Figure 14 generates signals OP2AD 0—2+, which point to a selected digit position of OP2 66 and are applied to the input address terminals of PROM 78-6. Write control signals OP2WC0+ and OP2WC1+ applied to the input address terminals indicate the following:

a. OP2 66 is not changed;

b. The selected digit position appearing on BI bus 100 is written into the corresponding digit position of OP2 66;

c. The byte which contains the selected digit position appearing on BI bus 100 is written into the corresponding byte position of OP2 66; and

d. The entire double word appearing on BI bus 100 is written into OP2 66.

13

Signals OP2WC0+ and OP2WC1+ at logical ZERO prevent information from being written into OP2 66 by forcing signals OP2WD 0—7+ to logical ZERO. Signal RD00+ at logical ONE and either or both signals RD01+ and RD03+ at logical ONE forces signal OP2WEN− to logical ONE via a negative AND gate 99 and a negative OR gate 78-7. Signal OP2WEN− at logical ONE forces signals OP2WC0+ and OP2WC1+ to logical ZERO.

Signals RD00+ and RD02+ at logical ONE select terminal 3 of MUX 78-5.

Signal OP2TYP+ at logical ONE selects signal OP2WC1+ at logical ONE and signal OP2WC0+ at logical ZERO forcing the PROM 78-6 output signals to write into the digit position indicated by signals OP2AD 0—2+. Signal OP2TYP− at logical ONE selects signal OP2WC0+ at logical ONE and OP2WC1+ at logical ZERO forcing the PROM 78-6 output signals to write into the byte position which includes the digit position printed to by signals OP2AD 0—2+ as shown in Table 1 below. Signal OP2TYP+ at logical ONE identifies the operand as a packed decimal operand, and at logical ZERO as a string decimal operand. This is shown in Figure 6. Bit position 8 of the data descriptors identifies the operand type.

Signals RD00+ at logical ONE and RD02+ at logical ZERO select MUX 78-5 position 2 which prevents any write into OP2 66 by forcing signals OP2WC0+ and OP2WC1+ to logical ZERO. Signals RD00+ at logical ZERO, RD01+ at logical ONE and RD02+ at logical ONE select MUX 78-5 position 1 to enable the writing of a double word into OP2 66 by forcing signal OP2WC0+ and OP2WC1+ to logical ONE as shown in Table 1 below.

Signals OP2WC0+ and OP2WC1+ may be controlled by the control store data register 62 output signals RD 00—03+ and OP2TYP+ as shown in the following Table 1.

TABLE 1

| OP2TYP+ | RD00+ | RD01+ | RD02+ | RD03+ | OP2WC0+ | OP2WC1+ |
|---------|-------|-------|-------|-------|---------|---------|
| X | 0 | 0 | 0 | X | 0 | 0 |
| X | 0 | 0 | 1 | X | 0 | 1 |
| X | 0 | 1 | 0 | X | 1 | 0 |
| X | 0 | 1 | 1 | X | 1 | 1 |
| X | 1 | 0 | 0 | 0 | 0 | 0 |
| 0 | 1 | 0 | 1 | 0 | 1 | 0 |
| 1 | 1 | 0 | 1 | 0 | 0 | 1 |
| X | 1 | X | X | 1 | 0 | 0 |
| X | 1 | 1 | X | 0 | 0 | 0 |

Signals OP2WC0+ and OP2WC1+ at logical ZERO indicate that nothing is written into OP2 66. Both signals at logical ONE indicate that a double word of 32 bits is written into OP2 66. Signals OP2WC0+ at logical ZERO and OP2WC1+ at logical ONE indicate that a decimal digit of 4 bits is written into OP2 66 at a digit position indicated by signals OP2AD 0—2+. Signals OP2WC0+ at logical ONE and OP2WC1+ at logical ZERO indicate that a byte of 8 bits is written into OP2 66 at a byte position indicated by signals OP2AD 0—2+.

**Claims**

1. A data processor (10) coupled to a main memory (4) for executing decimal arithmetic instructions under the control of operation codes (at 96) and descriptor words (Figure 6) that describe the characteristics of the operands, including the operand length and the operand type (packed decimal or string decimal); the processor operating serially by digit; including a descriptor storage register means (78, 82, 84, 88) for storing said descriptor words; control store means (60, 62) responsive to the operation code for generating a plurality of control signals; arithmetic and logic means (76); and register means (64, 66) for storing operands and their addresses, characterized by a read only memory (88-32, 88-33) addressed by the contents of the descriptor storage register means (88-30) and by said control signals during the progress of a decimal arithmetic instruction, said read only memory generating alignment signals (OPOFF, OPDSP) for pointing to the positions of the next digits in the operand words which are due to be operated on next by the arithmetic and logic means.

2. A processor according to claim 1, characterized in that the read only memory generates aligning signals (OPDSP) used during a first read cycle to transfer from memory a predetermined number of words

14

starting from a predetermined word position of the operand; the number of read cycles (OPDSP) to transfer the remaining words of the operand from the memory; and the position (OPOFF) of the predetermined starting character in the predetermined word position.

3. A processor according to claim 2, characterized in that the control store means generates a first (DIROFF) and a second (LTROFF) instruction direction signal in either a first or a second state.

4. A processor according to either of claims 2 and 3, characterized in that the read only memory comprises; a first read only memory (88-33) for generating a first plurality of aligning signals for indicating the number of read cycles to transfer the remaining words of the operand from the memory, and a second read only memory (88-32) responsive to the first instruction direction signal (DIROFF) in a second state for generating a second plurality of aligning signals for indicating the predetermined starting character position; to the first instruction direction signal in a first state and the second instruction direction signal (LTROFF) in a first state for generating the second plurality of aligning signals for indicating the predetermined character position in said low order word, a first signal of the second plurality of aligning signals in a first state calling for said low order word to be transferred from said memory during a two word transfer read cycle, and the first signal in a second state calling for the low order to be transferred from the memory during a one word transfer read cycle; and further responsive to the first instruction direction signal in the first state and the second instruction direction signal in a second state for generating the second plurality of aligning signals for indicating the predetermined character position in the high order word, the first signal in the second state calling for said high order word to be transferred from memory during the two word transfer read cycle, and said first signal in said first state calling for the high order word to be transferred from the memory during the one word transfer read cycle.

5. A processor according to claim 1, characterized by multiplixer means (84-2) coupled to the control store and generating a type signal (OP1TYB) and the decimal digit position signals (OP1AB); register means (84-3) coupled to the multiplexer means for storing the type signal and the decimal digit position siganls indicating a first predetermined decimal digit position; and read only memory means (84-1) coupled to the control means and said register means, and responsive to the plurality of control signals (RDO+), the type signal (OP1TYP) and the decimal digit position signals (OP1AD) representative of the first predetermined digit position for generating the decimal digit position signals indicative of a second predetermined decimal digit position.

6. A processor according to claim 1, characterized by first means (78-3) for generating a type signal (OP2TYP) indicative in a first state of a packed decimal operand and in a second state of a string decimal operand, and generating position signals (OP2AD) indicative of a one of the selected digit positions; second means (78-5) responsive to the type signal for generating a plurality of write control signals (OP2WC); and third means responsive to the position signals (78-6) and the plurality of write control signals for generating a plurality of write signals (OP2WD); wherein a register (66) is responsive to the plurality of write signals for selecting the digit positions for writing a byte of the decimal information of a string decimal operand and for writing a decimal digit of said decimal information of a packed decimal operand.

7. A processor according to claim 6, characterized in that the second means comprises: logic means (99, 78-7) for generating an enable signal (OP2WEN); and a multiplexer (78-5) responsive to the enable signal for selecting the type signal in said first state for generating a first of the plurality of write signals in a second state and a second of the plurality of write signals in a first state, and selecting the type signal in a second state for generating the first write signal in a first state and the second write signal in a second state.

8. A processor according to claim 7, characterized in that the third means (78-6) comprises: a read only memory responsive to the position signals, the first write control signal in the second state and the second write control signal in the first state for generating a first of the plurality of write signals in a first state for selecting the digit position of said register, for writing the decimal digit in said register, and responsive to the position signals, the first write control signal in the first state and the second write control signal in the second state for generating the first and second of the write signals in the first state for writing the byte in the register.

9. A processor according to claim 8, characterized in that the multiplexer (78-5) is responsive to the enable signal (OP2WEN) in a first state for generating the first and second write control signals in the second state; the read only memory (78-6) being responsive to the first and second write control signals in the second state for generating the plurality of write signals in a second state for disabling the writing into the register (66).

**Patentansprüche**

1. Datenverarbeitungsprozessor (10), der mit einem Hauptspeicher (4) verbunden ist, zur Ausführung dezimaler arithmetischer Befehle unter der Steuerung von Operationscodes (bei 96) und Deskriptorworten (Figur 6), welche die Merkmale der Operanden kennzeichnen einschließlich der Operandenlänge und des Operandentypus (gebündelt dezimal oder reihenförmig dezimal), mit seriell-digitaler Arbeitsweise des Prozessors, mit einem Deskriptorspeicherregister (78, 82, 84, 88) für die Speicherung der genannten Deskriptorworte, mit einem Befehlsspeicher (60, 62), der—durch den Operationscode veranläßt—eine Vielzahl von Befehlssignalen zu erzeugen in der Lage ist, mit Arithmetik- und Logikschaltungen (76) und Registerschaltmitteln (64, 66) zur Speicherung von Operanden und deren Adressen, gekennzeichnet durch einen Lesespeicher (88-32, 88-33), der mittels der Inhalte des Deskriptorspeicherregisters (88-30) und der genannten Befehlssignale während der Ausführung eines dezimalen arithmetischen Befehls adressiert wird, wobei dieser Lesespeicher Anvisiersignale (OPOFF, OPDSP) erzeugt, die auf Positionen der nächsten Zeichen in den Operandenworten -hindeuten die als nächste von den Arithmetik- und Logikschaltungen zu verarbeiten sind.

2. Datenverarbeitungsprozessor nach Anspruch 1, dadurch gekennzeichnet, daß der Lesespeicher Anvisiersignale (OPDSP) erzeugt, die während eines ersten Lesezyklus dazu verwendet werden, um vom Speicher eine vorbestimmte Anzahl von Worten, beginnend bei einer vorbestimmten Wortposition des Operanden, zu übertragen, wobei die Anzahl der Lesezyklen (OPDSP) zur Übertragung der verbleibenden Worte des Operanden aus dem Speicher dient, und wobei auch die Position (OPOFF) des vorbestimmten Startzeichens in der vorbestimmten Wortposition markiert ist.

3. Datenverarbeitungsprozessor nach Anspruch 2, dadurch gekennzeichnet, daß der Befehlsspeicher ein erstes (DIROFF) und ein zweites (LTROFF) Befehlsdirektionssignal in entweder einem ersten oder einem zweiten Zustand erzeugt.

4. Datenverarbeitungsprozessor nach Anspruch 2 oder nach Anspruch 3, dadurch gekennzeichnet, daß der Lesespeicher umfaßt:
einen ersten Lesespeicher (88-33) zur Erzeugung einer ersten Vielzahl von Anvisiersignalen für die Angabe der Lesezyklenanzahl zur Übertragung der verbleibenden Operandenworte aus dem Speicher, einen auf das erste, in seinem zweiten Zustand befindliche Befehlsdirektionssignal (DIROFF) ansprechenden zweiten Lesespeicher (88-32) zur Erzeugung einer zweiten Vielzahl von Anvisiersignalen zur Markierung der vorbestimmten Position des für den Start maßgebenden Zeichens, weiterhin ansprechbar auf das erste, in seinem ersten Zustand befindliche Befehlsdirektionssignal und auf das zweite, in sienem ersten Zustand befindliche Befehlsdirektionssignal (LTROFF) zur Erzeugung der zweiten Vielzahl von Anvisiersignalen zur Markierung der vorbestimmten Position des Zeichens im niedrigrangigem Wort, wobei ein erstes, in seinem ersten Zustand befindliches Signal aus der zweiten Vielzahl von Anvisiersignalen den Aufruf des genannten niedrigrangigen Wortes für die Übertragung aus dem Speicher während eines Zwei-Wort-Transfer Lesezyklus bewirkt, und das erste, in seinem zweiten Zustand befindliche genannte Signal den Aufruf des niedrigrangigen Wortes für die Übertragung aus dem Speicher während eines Ein-Wort-Transfer Lesezyklus bewirkt, und weiterhin ansprechbar auf das erste, in seinem ersten Zustand befindliche und das zweite, in seinem zweiten Zustand befindliche Befehlsdirektionssignal zur Erzeugung der zweiten Vielzahl von Anvisiersignalen zur Markierung der vorbestimmten Position des Zeichens im hochrangigen Wort, wobei das erste, in seinem zweiten Zustand befindliche Signal den Aufruf des genannten hochrangigen Wortes für die Übertragung aus dem Speicher während des Zwei-Wort-Transfer Lesezyklus bewirkt, und das erste, in seinem ersten Zustand befindliche genannte Signal den Aufruf des hochrangigen Wortes für die Übertragung aus dem Speicher während eines Ein-Wort-Transfer Lesezyklus bewirkt.

5. Datenverarbeitungsprozessor nach Anspruch 1, gekennzeichnet durch einen mit dem Befehlspeicher verbundenen Multiplexer (84-2) zur Erzeugung von Typussignalen (OP1TYB) und dezimalen Zeichenpositionssignalen (OP1AB), und durch eine mit dem Multiplexer verbundene Registerschaltung (84-3) zur Speicherung des genannten Typussignals und der dezimalen Zeichenpositionssignale zur Markierung einer ersten vorbestimmten dezimalen Zeichenstelle, und durch mit dem Befehlsspeicher und der genannten Registerschaltung verbundenen Lesespeicherschaltung (84-1), die ansprechbar ist auf die Vielzahl von Befehlssignalen (RDO+), auf die Typussignale (OP1TYP) und auf die dezimalen Zeichenpositionssignale (OP1AD), die für die erste vorbestimmte Zeichenstelle bestimmend sind zur Erzeugung der dezimalen Zeichenstellensignale für eine zweite vorbestimmte dezimale Zeichenstelle.

6. Datenverarbeitungsprozessor nach Anspruch 1, gekennzeichnet durch erste Mittel (78-3) zur Erzeugung eines Typussignale (OP2TYP), das in seinem ersten Zustand einen gebündelt-dezimalen und in seinem zweiten Zustand einen reihenförmig-dezimalen Operanden kennzeichnet, und zur Erzeugung von Positionssignalen (OP2AD) zur Kennzeichnung einer bestimmten Position innerhalb der selektierten Zeichenstellen, durch zweite, auf das Typussignal ansprechende Mittel (78-5) zur Erzeugung einer Vielzahl von Schreibbefehlssignalen (OP2WC), und durch dritte, auf die Positionssignale und die Vielzahl von Schreibbefehlssignalen ansprechende Mittel (78-6) zur Erzeugung einer Vielzahl von Schreibsignalen (OP2WD), wobei ein Register (66) auf die Vielzahl von Schreibsignalen an spricht zur Auswahl der Zeichenstelle für das Schreiben eines Byte der dezimalen Information eines reihenförmig-dezimalen Operanden und das Schreiben eines Dezimalzeichens dieser dezimalen Information eines gebündelt-dezimalen Operanden.

7. Datenverarbeitungsprozessor nach Anspruch 6, dadurch gekennzeichnet, daß die genannten zweiten Mittel umfassen: Logikmittel (99, 78-7) zur Erzeugung eines Auslössignals (OP2WEN), und einen auf das Auslösesignal ansprechenden Multiplexer (78-5) zur Auswahl des in seinem ersten Zustand befindlichen Typussignals für die Erzeugung eines aus der Vielzahl von Schreibsignalen ersten Signals in einem zweiten Zustand und eines aus der Vielzahl von Schreibsignalen zweiten Signals in einem ersten Zustand, und zur Auswahl des in seinem zweiten Zustand befindlichen Typussignals für die Erzeugung des ersten Schreibsignals in einem ersten Zustand und des zweiten Schreibsignals in einem zweiten Zustand.

8. Datenverarbeitungsprozessor nach Anspruch 7, dadurch gekennzeichnet, daß die genannten dritten Mittel umfassen: einen auf die Positionssignale ansprechenden Lesespeicher, wobei das erste, in seinem

# 0 055 128

zweiten Zustand befindliche Schreibbefehlssignal und das zweite, in seinem ersten Zustand befindliche Schreibbefehlssignal zur Erzeugung eines ersten, in einem ersten Zustand befindlichen Signals aus einer Vielzahl von Schreibsignalen zur Auswahl der Zeichenstelle in dem genannten Register und zum Einschreiben des Dezimalzeichens in das genannte Register dienen, und wobei das erste, in seinem ersten Zustand befindliche Schreibbefehlssignal und das zweite, in seinem zweiten Zustand befindliche Schreibbefehlssignal zur Erzeugung der ersten und zweiten, in ihrem ersten Zustand befindlichen Signale aus der Vielzahl von Schreibsignalen zum Einschreiben des Bytes in das Register dienen.

9. Datenverarbeitungsprozessor nach Anspruch 8, dadurch gekennzeichnet, daß der Multiplexer (78-5) auf das in seinem ersten Zustand befindliche Auslösesignal (OP2WEN) anspricht zur Erzeugung der in ihrem zweiten Zustand befindlichen ersten und zweiten Schreibbefehlssignale, und daß der Lesespeicher (78-6) auf die in ihrem zweiten Zustand befindlochen ersten und zweiten Schreibbefehlssignale anspricht zur Erzeugung der Vielzahl der in ihrem zweiten Zustand befindlichen Schreibsignale zur Sperrung des Einschreibens in das Register (66).

## Revendications

1. Processeur de données (10) couplé à une mémoire centrale (4) pour exécuter des instructions arithmétiques en décimal sous la commande de codes d'opération (en 96) et de mots descripteurs (Figure 6) qui décrivent les caractéristiques des opérandes, incluant la longueur d'opérande et le type d'opérande (en décimal condensé ou en décimal en chaîne); le processeur fonctionnant en série par chiffre; incluant un moyen à registres de mémorisation de descripteurs (78, 82, 84, 88) pour mémoriser les mots descripteurs; un moyen à mémoire de contrôle (60, 62) réagissant au code opération pour engendrer un ensemble de signaux de commande; un moyen arithmétique et logique (76); et un moyen à registres (64, 66) pour mémoriser des opérandes et leurs adresses, caractérisé par une mémoire morte (88-32, 88-33) adressée par les contenus du moyen à registres de mémorisation de descripteurs (88-30) et par les signaux de commande pendant le traitement d'une instruction arithmétique en décimal, la mémoire morte engendrant des signaux d'alignement (OPOFF, OPDSP) pour désigner les positions des chiffres suivants dans les mots d'opérande qui doivent être traités ensuite par le moyen arithmétique et logique.

2. Processeur selon la revendication 1, caractérisé en ce que la mémoire morte engendre des signaux d'alignement (OPDSP) utilisés pendant un premier cycle de lecture pour transférer à partir de la mémoire un nombre prédéterminé de mots en commençant par une position de mot prédéterminée de l'opérande; le nombre de cycles de lecture (OPDSP) pour transférer les mots restants de l'opérande à partir de la mémoire; et la position (OPOFF) du caractère de début prédéterminé à la position de mot prédéterminée.

3. Processeur selon la revendication 2, caractérisé en ce que le moyen à mémoire de contrôle engrendre un premier (DIROFF) et un second signal de direction d'instruction (LTROFF) dans un premier état ou dans un second état.

4. Processeur selon l'une quelconque des revendications 2 et 3, caractérisé en ce que la mémoire morte comprend; une première mémoire morte (88-33) pour engendrer un premier ensemble de signaux d'alignement pour indiquer le nombre de cycles de lecture afin de transférer les mots restants de l'opérande à partir de la mémoire, et une seconde mémoire morte (88-32) réagissant au premier signal de direction d'instruction (DIROFF) dans un second état pour engendrer un second ensemble de signaux d'alignement afin d'indiquer la position de caractère de début prédéterminé; au premier signal de direction d'instruction dans un premier état et au second signal de direction d'instruction (LTROFF) dans un premier état pour engendrer le second ensemble de signaux d'alignement afin d'indiquer la position de caractère prédéterminé dans le mot de poids faible, un premier signal du second ensemble de signaux d'alignement dans un premier état faisant appel au mot de poids faible à transférer à partir de la mémoire pendant un cycle de lecture pour le transfert de deux mots, et le premier signal dans un second état faisant appel au mot de poids faible à transférer à partir de la mémoire pendant un cycle de lecture pour le transfert d'un mot; et réagissant en outre au premier signal de direction d'instruction dans le premier état et au second signal de direction d'instruction dans un second état pour engendrer le second ensemble de signaux d'alignement afin d'indiquer la position de caractère prédéterminé dans le mot de poids fort, le premier signal dans le second état faisant appel au mot de poids fort à transférer à partir de la mémoire pendant le cycle de lecture pour le transfert de deux mots, et le premier signal dans le premier état faisant appel au mot de poids fort à transférer à partir de la mémoire pendant le cycle de lecture pour le transfert d'un mot.

5. Processeur selon la revendication 1, caractérisé par un moyen multiplexeur (84-2) couplé à la mémoire de contrôle et engendrant un signal de type (OP1TYB) et les signaux de position de chiffre décimal (OP1AB); un moyen à registre (84-3) couplé au moyen multiplexeur pour mémoriser le signal de type et les signaux de position de chiffre décimal indiquant une première position de chiffre décimal prédéterminé; et un moyen à mémoire morte (84-1) couplé au moyen de contrôle et au moyen à registres, et réagissant à l'ensemble de signaux de commande (RDO+), au signal de type (OP1TYP) et aux signaux de position de chiffre décimal (OP1AD) représentant la première position de chiffre prédéterminé pour engendrer les signaux de position de chiffre décimal indiquant une second position de chiffre décimal prédéterminé.

6. Processeur selon la revendication 1, caractérisé par un premier moyen (78-3) pour engendrer un signal de type (OP2TYP) indiquant, dans un premier état, un opérande de décimal condensé et, dans un

17

**0 055 128**

second état, un opérande de décimal en chaîne, et pour engendrer des signaux de position (OP2AD) indiquant une des positions de chiffres sélectionnés; un deuxième moyen (78-5) réagissant au signal de type pour engendrer un ensemble de signaux de commande d'écriture (OP2WC); et un troisième moyen (78-6) réagissant aux signaux de position et à l'ensemble de signaux de commande d'écriture pour engendrer un ensemble de signaux d'écriture (OP2WD); dans lequel un registre (66) réagit à l'ensemble des signaux d'écriture pour sélectionner les positions de chiffres afin d'écrire un multiplet de l'information décimale d'un opérande de décimal en chaîne et afin d'écrire un chiffre décimal de l'information décimale d'un opérande de décimal condensé.

7. Processeur selon la revendication 6, caractérisé en ce que le deuxième moyen comprend: un moyen logique (99, 78-7) pour engendrer un signal de validation (OP2WEN); et un multiplexeur (78-5) réagissant au signal de validation pour sélectionner le signal de type dans le premier état afin d'engendrer un premier signal de l'ensemble des signaux d'écriture dans un second état et un second signal de l'ensemble des signaux d'écriture dans un premier état, et pour sélectionner le signal de type dans un second état afin d'engendrer le premier signal d'écriture dans un premier état et le second signal d'écriture dans un second état.

8. Processeur selon la revendication 7, caractérisé en ce que le troisième moyen (78-6) comprend; une mémoire morte réagissant aux signaux de position, au premier signal de commande d'écriture dans le second état et au second signal de commande d'écriture dans le premier état pour engendrer un premier signal de l'ensemble des signaux d'écriture dans un premier état afin de sélectionner la position de chiffre du registre, afin d'écrire le chiffre décimal dans le registre, et réagissant aux signaux de position, au premier signal de commande d'écriture dans le premier état et au second signal de commande d'écriture dans le second état pour engendrer les premier et second signaux d'écriture dans le premier état afin d'écrire le multiplet dans le registre.

9. Processeur selon la revendication 8, caractérisé en ce que le multiplexeur (78-5) réagit au signal de validation (OP2WEN) dans un premier état pour engendrer les premier et second signaux de commande d'écriture dans le second état; la mémoire morte (78-6) réagissant aux premier et second signaux de commande d'écriture dans le second état pour engendrer l'ensemble des signaux d'écriture dans un second état afin d'invalider l'écriture dans le registre (66).

Fig. 1.

*Fig. 2.* *(sheet 1 of 2)*

**0 055 128**

INTERNAL (BI) BUS 100

OP2 — 66
0 31

70 SELECTOR

74 SIGN DECODE OVERPUNCH ENCODE

COMMON BUS DATA INTERFACE
80

COMMON BUS

16

78 OP2A CONTROL REG & LOGIC

82 ADDRESS CONTROL UNIT

CPU/CIP 24

90 CIP INDICATOR REGISTER
0 7

92 CIP MODE REGISTER
0 7

94 MICRO PROGRAM STATUS REGISTER
0 7

CIP/MMO BUS
18

CIP10

86 SYSTEM CLOCK LOGIC

REQUEST DCN GRANT

BUSY

*Fig. 2. (sheet 2 of 2)*

3

Fig. 3.
(sheet 1 of 2)

*Fig. 3.* (sheet 2 of 2)

0 055 128

Fig. 4.
(sheet 1 of 2)

Fig. 4.
(sheet 2 of 2)

0 055 128

OPERAND 1 - MULTIPLIER - PACKED DECIMAL, TRAILING SIGN

|  |  | (+) |  |
| X X | X 7 | 8 B | X X |

MAIN MEMORY 4

| BYTE ADDRESS LOCATIONS | A04 | A05 | A06 | A07 |
| WORD ADDRESS LOCATIONS (HEXADECIMAL) | 502 | | 503 | |

OPERAND 2- MULTIPLICAND -ASCII, TRAILING SIGN

| (0) 30 | (0) 30 | (9) 39 | (8) 38 | (7) 37 | (6) 36 | (5) 35 | (4) 34 | (3) 33 | (2) 32 | (1) 31 | (0) 30 | (+) 2 B | X X |

| 10A0 | 10A1 | 10A2 | 10A3 | 10A4 | 10A5 | 10A6 | 10A7 | 10A8 | 10A9 | 10AA | 10AB | 10AC | 10AD |
| 850 | | 851 | | 852 | | 853 | | 854 | | 855 | | 856 | |

| MAIN MEMORY 4 WORD ADDRESS LOCATIONS | DATA | DESCRIPTION | |
|---|---|---|---|
| 1000 | 0029 | DECIMAL MULTIPLY OPERATION CODE | |
| 1001 | E381 | DATA DESCRIPTOR 1 | OPERAND 1 |
| 1002 | 0002 | DISPLACEMENT 1 | |
| 1003 | 6D01 | DATA DESCRIPTOR 2 | OPERAND 2 |
| 1004 | 0350 | DISPLACEMENT 2 | |

CIP 10 RECEIVES

| FUNCTION CODE | DATA | DESCRIPTION | |
|---|---|---|---|
| 07 | XXXX 0029 | DECIMAL MULTIPLY OPERATION CODE | |
| 09 | X000 0A05 | EFFECTIVE BYTE ADDRESS 1 | OPERAND 1 |
| 0F | XXXX E381 | DATA DESCRIPTOR 1 | |
| 09 | X000 10A0 | EFFECTIVE BYTE ADDRESS 2 | OPERAND 2 |
| 1F | XXXX 6D01 | DATA DESCRIPTOR 2 | |

Fig. 5.

```
                              E        3        8        1     DATA DESCRIPTOR 1
             BIT POSTIONS  0     3 | 4     7 | 8    11 | 12   15 | (OPERAND 1)
                           1 1 0 | 0 0 1 1 | 1 0 0 0 | 0 0 0 1 |
```

SECOND DIGIT POSITION IN
RIGHT BYTE OF WORD
(DIGIT POSITION 3)

TRAILING SIGN

OPERAND 1 HAS 3
DIGIT POSITIONS

PACKED DECIMAL

ADDRESS IS CONTENTS
OF CPU 2 BASE REGISTER 1
(0500)+ DISPLACEMENT (0002)

```
                              6        D        0        1     DATA DESCRIPTOR 2
             BIT POSITIONS  0     3 | 4     7 | 8    11 | 12   15 | (OPERAND 2)
                           0 1 1 0 | 1 1 0 1 | 0 0 0 0 | 0 0 0 1 |
```

FIRST DIGIT POSITION IN
LEFT BYTE OF WORD

TRAILING SEPARATE SIGN

OPERAND 2 HAS 13
BYTE POSITIONS

ASCII

ADDRESS IS CONTENTS
OF CPU 2 BASE REGISTER 1
(0500)+ DISPLACEMENT (0350)

*Fig. 6.*

9

DML 100
CLEAR UNITS CARRY 76-5
CLEAR TENS CARRY 76-6
LOAD AB 50-3
LOAD OP2A 78

FROM DML270

DML 102
LOAD OP1A 84

DML 105
LOAD MULTIPLIER DIGIT IN MIER 52
DECREMENT OP1A 84
DECREMENT OP2A 78

COUNTER 1
=0
≠0

DML 110
STORE CONTENTS OF OP1A 84 IN RFC 82-1
DECREMENT COUNTER 1 88-1
DECREMENT COUNTER 3 88-3

MULTIPLIER DIGIT
=0
≠0

DML 200
STORE CONTENTS OF AB 50-3 IN RFC 82-1
STORE CONTENTS OF OP2A 78 IN RFC 82-1
INCREMENT COUNTER 3 88-3

DML 205
LOAD AA 50-2
LOAD OP1A 84

DML 150
LOAD AA 50-2
LOAD OP1A 84

DML 210
TRANSFER RFD (AA) 50-1 TO OP1 64
DECREMENT AA 50-2

DML 220
TRANSFER RFD (AB) 50-1 TO OP2 66

DML 225
TRANSFER MULTIPLICAND DIGIT COUNT FROM RFC 82-1 TO COUNTER 1 88-1 AND COUNTER 2 88-2
CLEAR UNITS CARRY 76-5
CLEAR TENS CARRY 76-6

DML 230
ADD UNITS PARTIAL PRODUCT DIGIT FROM PROM 54-1 INTO OP2 66
DECREMENT OP2A 78
SET UNITS CARRY 76-5

OP2A
=X000
≠X000

DML 235
ADD TENS PARTIAL PRODUCT DIGIT FROM PROM 54-1 INTO OP2 66
DECREMENT COUNTER 1 88-1
DECREMENT COUNTER 2 88-2
DECREMENT OP1A 84
SET TENS CARRY 76-6

OP1A COUNTER 1
COUNTER 1 =00
OP1A ≠ =0001
COUNTER 1 ≠00
OP1A =0001
COUNTER 1 ≠00

DML 250
TRANSFER RFD (AA) 50-1 TO OP1 64
DECREMENT AA 50-2

*Fig. 7.*
*(sheet 1 of 2)*

a  b                                    c

10

a b        c

DML 240
TRANSFER OP2 66 TO
OP1 64
DECREMENT AB 50-3

DML 245
TRANSFER RFD (AB) 50-2
TO OP2 66

DML 255
ADD UNITS CARRY 76-5
OUTPUT TO OP2 66

=00 ◇ COUNTER 3

≠00

DML 260
TRANSFER OP2 66 TO RFD (AB) 50-1

DML 265
RECEIVE MULTIPLIER DOUBLE WORD IN
OP1 64
DECREMENT COUNTER 3 88-3

DML 270
TRANSFER CONTENTS OF COUNTER 3 88-3
TO COUNTER 1 88-1

TO DML 100

DML 295
TRANSFER OP2 66 TO RFD (AB) 50-1

DML 300
START OF PRODUCT WRITE ROUTINE

*Fig. 7. (sheet 2 of 2)*

| DML | COUNTER 1 88-1 | 2 88-2 | 3 88-3 | OP1A 84 | OP1 64 | RFD 50-1 AA A8 50-2 50-3 | OP2 66 | OP2A 78 | MIER 52 X OP1 64 | CARRY |
|---|---|---|---|---|---|---|---|---|---|---|
| 100 | | 00 | | | X X X 7 8 B X X | 8 | | F | | 0 C |
| 102 | | | | C | X X X 7 8 B X X | | | F | | |
| 105 | | | | B | X X X 7 8 B X X | | | E | 8 | |
| 110 | 00 | | | B | | | | | | |
| 200 | | | 01 | B | | | | | | |
| 205 | | | 01 | 7 | | F | | | | |
| 210 | | | 01 | 7 | 3 3 3 2 3 1 3 C | E | | | | |
| 220 | | | 01 | 7 | | 8 → 0 0 0 0 0 0 0 0 | | | | |
| 225 | 09 | 09 | 01 | 7 | | | 0 0 0 0 0 0 0 0 | E | | |
| 230 | 09 | 09 | 01 | 7 | 3 0 | | 0 0 0 0 0 0 0 0 | D | 8 X 3 0 - X 0 | 0 |
| 235 | 08 | 08 | 01 | 5 | 3 0 | | 0 0 0 0 0 0 0 0 | D | - 0 X | 0 |
| 230 | 08 | 08 | 01 | 5 | 3 1 | | 0 0 0 0 8 0 0 | C | 8 X 3 1 - X 8 | 0 |
| 235 | 07 | 07 | 01 | 3 | 3 1 | | 0 0 0 0 0 8 0 0 | C | - 0 X | 0 |
| 230 | 07 | 07 | 01 | 3 | 3 2 | | 0 0 0 0 6 8 0 0 | B | 8 X 3 2 - X 6 | 0 |
| 235 | 06 | 06 | 01 | (0001) 1 | 3 2 | | 0 0 0 1 6 8 0 0 | 8 | - 1 X | 0 |
| 230 | 06 | 06 | 01 | (0001) 1 | 3 3 | | 0 0 0 5 6 8 0 0 | A | 8 X 3 3 - X 4 | 0 |
| 235 | 05 | 05 | 01 | 7 | 3 3 3 2 3 1 3 0 | E | 0 0 2 5 6 8 0 0 | A | - 2 X | 0 |
| 250 | 05 | 05 | 01 | 7 | 3 7 3 6 3 5 3 4 | D | 0 0 2 5 6 8 0 0 | A | | 0 |
| 230 | 05 | 05 | 01 | 7 | 3 4 | | 0 0 4 5 6 8 0 0 | 9 | 8 X 3 4 - X 2 | 0 |
| 235 | 04 | 04 | 01 | 5 | 3 4 | | 0 3 4 5 6 8 0 0 | 9 | - 3 X | 0 |
| 230 | 04 | 04 | 01 | 5 | 3 5 | | 0 3 4 5 6 8 0 0 | C (1000) | 8 X 3 5 - X 0 | 0 |
| 235 | 03 | 03 | 01 | 3 | 3 5 | | 4 3 4 5 6 8 0 0 | 8 (1000) | - 4 X | 0 |
| 230 | 03 | 03 | 01 | 3 | 3 6 | 8 | 2 3 4 5 6 8 0 0 | F | 8 X 3 6 - X 8 | 1 |
| 240 | 03 | 03 | 01 | 3 | 3 6 | 7 | 2 3 4 5 6 8 0 0 | F | | 1 |
| 245 | 03 | 03 | 01 | 3 | | | 0 0 0 0 0 0 0 0 | F | | 1 |
| 235 | 02 | 02 | 01 | (0001) 1 | | | 0 0 0 0 0 0 0 4 | F | - 4 X | 1 0 |
| 230 | 02 | 02 | 01 | (0001) 1 | 3 7 | | 0 0 0 0 0 0 0 1 | E | 8 X 3 7 - X 6 | 1 |
| 235 | 01 | 01 | 01 | 7 | 3 7 3 6 3 5 3 4 | D | 0 0 0 0 0 5 1 | E | - 5 X | 1 0 |
| 250 | 01 | 01 | 01 | 7 | 3 0 3 0 3 9 3 8 | C | 0 0 0 0 0 0 5 1 | E | | 1 |
| 230 | 01 | 01 | 01 | 7 | 3 8 | | 0 0 0 0 0 0 0 1 | D | 8 X 3 8 - X 4 | 1 0 |
| 235 | 00 | 00 | 01 | 5 | 3 8 | | 0 0 0 0 6 0 1 | D | - 6 X | 1 |
| 230 | 00 | 00 | 01 | 5 | 3 9 | | 0 0 0 0 9 0 1 | C | 8 X 3 9 - X 2 | 0 0 |
| 235 | FF | FF | 01 | 3 | 3 9 | | 0 0 0 7 9 0 1 | C | - 7 X | 0 |
| 255 | FF | FF | 01 | 3 | | 7 | 0 0 0 0 7 9 0 1 | C | | |
| 260 | FF | FF | 01 | 3 | 3 0 3 0 3 9 3 8 | 7 | 0 0 0 0 7 9 0 1 | C | | |

*Fig. 8. (sheet 1 of 2)*

12

| DML | COUNTER 1 88-1 | COUNTER 2 88-2 | COUNTER 3 88-3 | OP1A 84 | OP1 64 | RFD 50-1 AA 50-2 | AB 50-3 | OP2 66 | OP2A 78 | MIER 52 X OP1 64 | CARRY U | CARRY T |
|---|---|---|---|---|---|---|---|---|---|---|---|---|
| 265 | | | 00 | C | X X X 7 8 8 X X | | | | | | | |
| 270 | 00 | | 00 | C | | | 8 | | E | | | |
| 100 | | | | C | | | | | | | | |
| 102 | | | | 8 | | | | | | | | |
| 105 | | | | A | X X X 7 8 8 X X | | | | D | 7 | | |
| 150 | | | | 7 | | F | | | | | | |
| 210 | | | | 7 | 3 3 3 2 3 1 3 C | E | | | | | | |
| 220 | | | | 7 | | | | 8 → 2 3 4 5 6 8 0 0 | | | | |
| 225 | 09 | 09 | 00 | 7 | | | | | D | | | |
| 230 | 09 | 09 | 00 | 7 | 3 0 | | | 2 3 4 5 6 8 0 0 | C | 7 X 3 0 - X 0 | 0 | |
| 235 | 08 | 08 | 00 | 5 | 3 0 | | | 2 3 4 5 6 8 0 0 | C | - 0 X | | 0 |
| 230 | 08 | 08 | 00 | 5 | 3 1 | | | 2 3 4 5 3 8 0 0 | B | 7 X 3 1 - X 7 | 1 | |
| 235 | 07 | 07 | 00 | 3 | 3 1 | | | 2 3 4 5 3 8 0 0 | B | - 0 X | 1 | 0 |
| 230 | 07 | 07 | 00 | 3 | 3 2 | | | 2 3 4 0 3 8 0 0 | A | 7 X 3 2 - X 4 | 1 | |
| 235 | 06 | 06 | 00 | 1 | 3 2 | | | 2 3 5 0 3 8 0 0 | A | - 4 X | 1 | 0 |
| 230 | 06 | 06 | 00 | 1 | 3 3 | | | 2 3 7 0 3 8 0 0 | 9 | 7 X 3 3 - X 1 | 0 | |
| 235 | 05 | 05 | 00 | 7 | 3 3 3 2 3 1 3 0 | E | | 2 5 7 0 3 8 0 0 | 9 | - 2 X | 0 | 0 |
| 250 | 05 | 05 | 00 | 7 | 3 7 3 6 3 5 3 4 | D | | | 9 | | | 0 |
| 230 | 05 | 05 | 00 | 7 | 3 4 | | | 2 5 7 0 3 8 0 0 | 8 (1000) | 7 X 3 4 - X 8 | 1 | |
| 235 | 04 | 04 | 00 | 5 | 3 4 | | | 4 3 7 0 3 8 0 0 | 8 (1000) | - 2 X | 1 | 0 |
| 230 | 04 | 04 | 00 | 5 | 3 5 | | 8 | 0 3 7 0 3 0 0 0 | F (1111) | 7 X 3 5 - X 5 | 1 | |
| 240 | 04 | 04 | 00 | 5 | | | 7 | 0 3 7 0 3 8 0 0 | F | | 1 | |
| 245 | 04 | 04 | 00 | 5 | | | | 0 0 0 0 7 9 0 1 | F | | 1 | |
| 235 | 03 | 03 | 00 | 3 | 3 5 | | | 0 0 0 0 7 9 0 4 | F | - 3 X | 1 | 0 |
| 230 | 03 | 03 | 00 | 3 | 3 6 | | | 0 0 0 0 7 9 0 7 | E | 7 X 3 6 - X 2 | 0 | |
| 235 | 02 | 02 | 00 | 1 | 3 6 | | | 0 0 0 0 7 9 4 7 | E | - 4 X | 0 | 0 |
| 230 | 02 | 02 | 00 | 4 | 3 7 | | | 0 0 0 0 7 9 3 7 | D | 7 X 3 7 - X 9 | 1 | |
| 235 | 01 | 01 | 00 | 7 | 3 7 3 6 3 5 3 4 | D | | 0 0 0 0 7 3 3 7 | D | - 4 X | 1 | 1 |
| 250 | 01 | 01 | 00 | 7 | 3 0 3 0 3 9 3 8 | C | | | D | | 1 | 1 |
| 230 | 01 | 01 | 00 | 7 | 3 8 | | | 0 0 0 0 7 0 3 7 | C | 7 X 3 8 - X 6 | 1 | 1 |
| 235 | 00 | 00 | 00 | 5 | 3 8 | | | 0 0 0 0 3 0 3 7 | C | - 5 X | 1 | 1 |
| 230 | 00 | 00 | 00 | 5 | 3 9 | | | 0 0 0 0 7 0 3 7 | B | 7 X 3 9 - X 3 | 0 | 1 |
| 235 | FF | FF | 00 | 3 | 3 9 | | | 0 0 0 7 7 0 3 7 | B | - 6 X | 0 | 0 |
| 255 | FF | FF | 00 | 3 | 3 0 3 0 3 9 3 8 | | 7 | 0 0 0 7 7 0 3 7 | | | | |
| 295 | | | | | | | | 0 0 0 7 7 0 3 7 | | | | |

*Fig. 8. (sheet 2 of 2)*

13

Fig. 9.
(sheet 1 of 2)

Fig. 9. (sheet 2 of 2)

ADDRESS DISPLACEMENT READ ONLY MEMORY 88-33

| INPUT ADDRESS | | | | | | | | COMMENTS | OUTPUT | | | |
|---|---|---|---|---|---|---|---|---|---|---|---|---|
| 128 | 64 | 32 | 16 | 8 | 4 | 2 | 1 | | 3 | 2 | 1 | 0 |
| D S C R O 8 + | D S C R O 0 + | D S C R O 1 + | C T R 3 O 3 + | C T R 3 O 4 + | C T R 3 O 5 + | C T R 3 O 6 + | C T R 3 O 7 + | | O P D S P O + | O P D S P 1 + | O P D S P 2 + | O P D S P 3 + |
| 1 | 1 | 0 | 0 | 0 | 0 | X | X | PKD,OFF=2,L=0-3 | 0 | 0 | 0 | 0 |
| 1 | 1 | 0 | 0 | 0 | 1 | 0 | X | PKD,OFF=2,L=4,5 | 0 | 0 | 0 | 0 |
| 1 | 1 | 0 | 0 | 0 | 1 | 1 | 0 | PKD,OFF=2,L=6 | 0 | 0 | 0 | 0 |
| 1 | 1 | 0 | 0 | 0 | 1 | 1 | 1 | PKD,OFF=2,L=7 | 0 | 0 | 0 | 1 |
| 1 | 1 | 0 | 0 | 1 | 0 | X | X | PKD,OFF=2,L=8-11 | 0 | 0 | 0 | 1 |
| 1 | 1 | 0 | 0 | 1 | 1 | 0 | X | PKD,OFF=2,L=12,13 | 0 | 0 | 0 | 1 |
| 1 | 1 | 0 | 0 | 1 | 1 | 1 | 0 | PKD,OFF=2,L=14 | 0 | 0 | 0 | 1 |
| 1 | 1 | 0 | 0 | 1 | 1 | 1 | 1 | PKD,OFF=2,L=15 | 0 | 0 | 1 | 0 |
| 1 | 1 | 0 | 1 | 0 | 0 | X | X | PKD,OFF=2,L=16-19 | 0 | 0 | 1 | 0 |
| 1 | 1 | 0 | 1 | 0 | 1 | 0 | X | PKD,OFF=2,L=20,21 | 0 | 0 | 1 | 0 |
| 1 | 1 | 0 | 1 | 0 | 1 | 1 | 0 | PKD,OFF=2,L=22 | 0 | 0 | 1 | 0 |
| 1 | 1 | 0 | 1 | 0 | 1 | 1 | 1 | PKD,OFF=2,L=23 | 0 | 0 | 1 | 1 |
| 1 | 1 | 0 | 1 | 1 | 0 | X | X | PKD,OFF=2,L=24-27 | 0 | 0 | 1 | 1 |
| 1 | 1 | 0 | 1 | 1 | 1 | 0 | X | PKD,OFF=2,L=28,29 | 0 | 0 | 1 | 1 |
| 1 | 1 | 0 | 1 | 1 | 1 | 1 | 0 | PKD,OFF=2,L=30 | 0 | 0 | 1 | 1 |
| 1 | 1 | 0 | 1 | 1 | 1 | 1 | 1 | PKD,OFF=2,L=31 | 0 | 1 | 0 | 0 |
| 1 | 1 | 1 | 0 | 0 | 0 | X | X | PKD,OFF=3,L=0-3 | 0 | 0 | 0 | 0 |
| 1 | 1 | 1 | 0 | 0 | 1 | 0 | X | PKD,OFF=3,L=4,5 | 0 | 0 | 0 | 0 |
| 1 | 1 | 1 | 0 | 0 | 1 | 1 | X | PKD,OFF=3,L=6,7 | 0 | 0 | 0 | 1 |
| 1 | 1 | 1 | 0 | 1 | 0 | X | X | PKD,OFF=3,L=8-11 | 0 | 0 | 0 | 1 |
| 1 | 1 | 1 | 0 | 1 | 1 | 0 | X | PKD,OFF=3,L=12,13 | 0 | 0 | 0 | 1 |
| 1 | 1 | 1 | 0 | 1 | 1 | 1 | X | PKD,OFF=3,L=14,15 | 0 | 0 | 1 | 0 |
| 1 | 1 | 1 | 1 | 0 | 0 | X | X | PKD,OFF=3,L=16-19 | 0 | 0 | 1 | 0 |
| 1 | 1 | 1 | 1 | 0 | 1 | 0 | X | PKD,OFF=3,L=20,21 | 0 | 0 | 1 | 0 |
| 1 | 1 | 1 | 1 | 0 | 1 | 1 | X | PKD,OFF=3,L=22,23 | 0 | 0 | 1 | 1 |
| 1 | 1 | 1 | 1 | 1 | 0 | X | X | PKD,OFF=3,L=24-27 | 0 | 0 | 1 | 1 |
| 1 | 1 | 1 | 1 | 1 | 1 | 0 | X | PKD,OFF=3,L=28,29 | 0 | 0 | 1 | 1 |
| 1 | 1 | 1 | 1 | 1 | 1 | 1 | X | PKD,OFF=3,L=30,31 | 0 | 1 | 0 | 0 |

Fig. 10. (sheet 1 of 2)

ADDRESS DISPLACEMENT READ ONLY MEMORY 88-33

| INPUT ADDRESS | | | | | | | | COMMENTS | OUTPUT | | | |
|---|---|---|---|---|---|---|---|---|---|---|---|---|
| 128 | 64 | 32 | 16 | 8 | 4 | 2 | 1 | | 3 | 2 | 1 | 0 |
| DSCR08+ | DSCR00+ | DSCR01+ | CTR3303+ | CTR3304+ | CTR3305+ | CTR3306+ | CTR3307+ | | OPDSP0+ | OPDSP1+ | OPDSP2- | OPDSP3- |
| 0 | 0 | X | 0 | 0 | 0 | X | X | STR,OFF=0,L=0-3 | 0 | 0 | 0 | 0 |
| 0 | 0 | X | 0 | 0 | 1 | 0 | 0 | STR,OFF=0,L=4 | 0 | 0 | 0 | 0 |
| 0 | 0 | X | 0 | 0 | 1 | 0 | 1 | STR,OFF=0,L=5 | 0 | 0 | 0 | 1 |
| 0 | 0 | X | 0 | 0 | 1 | 1 | X | STR,OFF=0,L=6,7 | 0 | 0 | 0 | 1 |
| 0 | 0 | X | 0 | 1 | 0 | 0 | 0 | STR,OFF=0,L=8 | 0 | 0 | 0 | 1 |
| 0 | 0 | X | 0 | 1 | 0 | 0 | 1 | STR,OFF=0,L=9 | 0 | 0 | 1 | 0 |
| 0 | 0 | X | 0 | 1 | 0 | 1 | X | STR,OFF=0,L=10,11 | 0 | 0 | 1 | 0 |
| 0 | 0 | X | 0 | 1 | 1 | 0 | 0 | STR,OFF=0,L=12 | 0 | 0 | 1 | 0 |
| 0 | 0 | X | 0 | 1 | 1 | 0 | 1 | STR,OFF=0,L=13 | 0 | 0 | 1 | 1 |
| 0 | 0 | X | 0 | 1 | 1 | 1 | X | STR,OFF=0,L=14,15 | 0 | 0 | 1 | 1 |
| 0 | 0 | X | 1 | 0 | 0 | 0 | 0 | STR,OFF=0,L=16 | 0 | 0 | 1 | 1 |
| 0 | 0 | X | 1 | 0 | 0 | 0 | 1 | STR,OFF=0,L=17 | 0 | 1 | 0 | 0 |
| 0 | 0 | X | 1 | 0 | 0 | 1 | X | STR,OFF=0,L=18,19 | 0 | 1 | 0 | 0 |
| 0 | 0 | X | 1 | 0 | 1 | 0 | 0 | STR,OFF=0,L=20 | 0 | 1 | 0 | 0 |
| 0 | 0 | X | 1 | 0 | 1 | 0 | 1 | STR,OFF=0,L=21 | 0 | 1 | 0 | 1 |
| 0 | 0 | X | 1 | 0 | 1 | 1 | X | STR,OFF=0,L=22,23 | 0 | 1 | 0 | 1 |
| 0 | 0 | X | 1 | 1 | 0 | 0 | 0 | STR,OFF=0,L=24 | 0 | 1 | 1 | 0 |
| 0 | 0 | X | 1 | 1 | 0 | 0 | 1 | STR,OFF=0,L=25 | 0 | 1 | 1 | 0 |
| 0 | 0 | X | 1 | 1 | 0 | 1 | X | STR,OFF=0,L=26,27 | 0 | 1 | 1 | 0 |
| 0 | 0 | X | 1 | 1 | 1 | 0 | 0 | STR,OFF=0,L=28 | 0 | 1 | 1 | 0 |
| 0 | 0 | X | 1 | 1 | 1 | 0 | 1 | STR,OFF=0,L=29 | 0 | 1 | 1 | 1 |
| 0 | 0 | X | 1 | 1 | 1 | 1 | X | STR,OFF=0,L=30,31 | 0 | 1 | 1 | 1 |
| 0 | 1 | X | A | B | C | X | X | STR,OFF=1 | 0 | A | B | C |
| 1 | 0 | 0 | 0 | 0 | X | X | X | PKD,OFF=0,L=0-7 | 0 | 0 | 0 | 0 |
| 1 | 0 | 0 | 0 | 1 | 0 | 0 | 0 | PKD,OFF=0,L=8 | 0 | 0 | 0 | 0 |
| 1 | 0 | 0 | 0 | 1 | 0 | 0 | 1 | PKD,OFF=0,L=9 | 0 | 0 | 0 | 1 |
| 1 | 0 | 0 | 0 | 1 | 0 | 1 | X | PKD,OFF=0,L=10,11 | 0 | 0 | 0 | 1 |
| 1 | 0 | 0 | 0 | 1 | 1 | X | X | PKD,OFF=0,L=12-15 | 0 | 0 | 0 | 1 |
| 1 | 0 | 0 | 1 | 0 | 0 | 0 | 0 | PKD,OFF=0,L=16 | 0 | 0 | 0 | 1 |
| 1 | 0 | 0 | 1 | 0 | 0 | 0 | 1 | PKD,OFF=0,L=17 | 0 | 0 | 1 | 0 |
| 1 | 0 | 0 | 1 | 0 | 0 | 1 | X | PKD,OFF=0,L=18,19 | 0 | 0 | 1 | 0 |
| 1 | 0 | 0 | 1 | 0 | 1 | X | X | PKD,OFF=0,L=20-23 | 0 | 0 | 1 | 0 |
| 1 | 0 | 0 | 1 | 1 | 0 | 0 | 0 | PKD,OFF=0,L=24 | 0 | 0 | 1 | 0 |
| 1 | 0 | 0 | 1 | 1 | 0 | 0 | 1 | PKD,OFF=0,L=25 | 0 | 0 | 1 | 1 |
| 1 | 0 | 0 | 1 | 1 | 0 | 1 | X | PKD,OFF=0,L=26,27 | 0 | 0 | 1 | 1 |
| 1 | 0 | 0 | 1 | 1 | 1 | X | X | PKD,OFF=0,L=28-31 | 0 | 0 | 1 | 1 |
| 1 | 0 | 1 | A | B | X | X | X | PKD,OFF=1 | 0 | 0 | A | B |

X    IGNORE VALUE

A   ⎫
B   ⎬ INPUT VALUES COPIED TO OUTPUT
C   ⎭

PKD   OPERAND IS PACKED·BCD DIGITS
STR   OPERAND IS AN ASCII STRING

OFF   DATA DESCRIPTOR OFFSET
BIT 0 OF DD FOR STRING
BIT 0, 1 OF DD FOR PACKED
L   ACTUAL OPERAND LENGTH

*Fig. 10. (sheet 2 of 2)*

DIGIT OFFSET READ ONLY MEMORY 28-32

Legend:
- LTR: LEFT-TO-RIGHT
- RTL: RIGHT-TO-LEFT
- OFF: DD(CO) FOR STRING(STR)
  - DD(CO,C1) FOR (PKD)
- DIR: DIRECT FROM DSCR
- (MOD N): CTR3 MOD N

| 128 | 64 | 32 | 16 | 8 | 4 | 2 | 1 | COMMENTS | OPOFF0 | OPOFF1 | OPOFF2 |
|---|---|---|---|---|---|---|---|---|---|---|---|
| DIR | LTR | DSCR0 | DSCR0 | DSCR0 | CTR3 | CTR3 | CTR3 | | | | |
| OFF- | OFF- | 8+ | 0+ | 1+ | 05+ | 06+ | 07+ | | | | |
| 0 | 1 | 0 | 0 | X | X | X | X | DIR-STR-OFF=0 | 0 | 0 | 1 |
| 0 | 1 | 0 | 1 | X | X | X | X | DIR-STR-OFF=1 | 0 | 1 | 1 |
| 0 | 1 | 1 | 0 | 0 | X | X | X | DIR-PKD-OFF=0 | 0 | 0 | 0 |
| 0 | 1 | 1 | 0 | 1 | X | X | X | DIR-PKD-OFF=1 | 0 | 0 | 1 |
| 0 | 1 | 1 | 1 | 0 | X | X | X | DIR-PKD-OFF=2 | 0 | 1 | 0 |
| 0 | 1 | 1 | 1 | 1 | X | X | X | DIR-PKD-OFF=3 | 0 | 1 | 1 |
| 1 | 0 | 0 | 0 | X | X | 0 | 0 | LTR-STR-OFF=0-(MOD 4)=0 | 0 | 0 | 1 |
| 1 | 0 | 0 | 0 | X | X | 0 | 1 | LTR-STR-OFF=0-(MOD 4)=1 | 1 | 0 | 1 |
| 1 | 0 | 0 | 0 | X | X | 1 | 0 | LTR-STR-OFF=0-(MOD 4)=2 | 1 | 0 | 1 |
| 1 | 0 | 0 | 0 | X | X | 1 | 1 | LTR-STR-OFF=0-(MOD 4)=3 | 0 | 0 | 1 |
| 1 | 0 | 0 | 1 | X | X | 0 | 0 | LTR-STR-OFF=1-(MOD 4)=0 | 1 | 1 | 1 |
| 1 | 0 | 0 | 1 | X | X | 0 | 1 | LTR-STR-OFF=1-(MOD 4)=1 | 1 | 1 | 1 |
| 1 | 0 | 0 | 1 | X | X | 1 | 0 | LTR-STR-OFF=1-(MOD 4)=2 | 0 | 1 | 1 |
| 1 | 0 | 0 | 1 | X | X | 1 | 1 | LTR-STR-OFF=1-(MOD 4)=3 | 0 | 1 | 1 |
| 1 | 0 | 1 | 0 | 0 | 0 | 0 | 0 | LTR-PKD-OFF=0-(MOD 8)=0 | 0 | 0 | 0 |
| 1 | 0 | 1 | 0 | 0 | 0 | 0 | 1 | LTR-PKD-OFF=0-(MOD 8)=1 | 1 | 0 | 0 |
| 1 | 0 | 1 | 0 | 0 | 0 | 1 | X | LTR-PKD-OFF=0-(MOD 8)=2,3 | 1 | 0 | 0 |
| 1 | 0 | 1 | 0 | 0 | 1 | 0 | 0 | LTR-PKD-OFF=0-(MOD 8)=4 | 1 | 0 | 0 |
| 1 | 0 | 1 | 0 | 0 | 1 | 0 | 1 | LTR-PKD-OFF=0-(MOD 8)=5 | 0 | 0 | 0 |
| 1 | 0 | 1 | 0 | 0 | 1 | 1 | X | LTR-PKD-OFF=0-(MOD 8)=6,7 | 0 | 0 | 0 |
| 1 | 0 | 1 | 0 | 1 | 0 | X | X | LTR-PKD-OFF=1-(MOD 8)=0-3 | 1 | 0 | 1 |
| 1 | 0 | 1 | 0 | 1 | 1 | X | X | LTR-PKD-OFF=1-(MOD 8)=4-7 | 0 | 0 | 1 |
| 1 | 0 | 1 | 1 | 0 | 0 | 0 | X | LTR-PKD-OFF=2-(MOD 8)=0,1 | 1 | 1 | 0 |
| 1 | 0 | 1 | 1 | 0 | 0 | 1 | 0 | LTR-PKD-OFF=2-(MOD 8)=2 | 1 | 1 | 0 |
| 1 | 0 | 1 | 1 | 0 | 0 | 1 | 1 | LTR-PKD-OFF=2-(MOD 8)=3 | 0 | 1 | 0 |
| 1 | 0 | 1 | 1 | 0 | 1 | 0 | X | LTR-PKD-OFF=2-(MOD 8)=4,5 | 0 | 1 | 0 |
| 1 | 0 | 1 | 1 | 0 | 1 | 1 | 0 | LTR-PKD-OFF=2-(MOD 8)=6 | 0 | 1 | 0 |
| 1 | 0 | 1 | 1 | 0 | 1 | 1 | 1 | LTR-PKD-OFF=2-(MOD 8)=7 | 1 | 1 | 0 |
| 1 | 0 | 1 | 1 | 1 | 0 | 0 | X | LTR-PKD-OFF=3-(MOD 8)=0,1 | 1 | 1 | 1 |
| 1 | 0 | 1 | 1 | 1 | 0 | 1 | X | LTR-PKD-OFF=3-(MOD 8)=2,3 | 0 | 1 | 1 |
| 1 | 0 | 1 | 1 | 1 | 1 | 0 | X | LTR-PKD-OFF=3-(MOD 8)=4,5 | 0 | 1 | 1 |
| 1 | 0 | 1 | 1 | 1 | 1 | 1 | X | LTR-PKD-OFF=3-(MOD 8)=6,7 | 1 | 1 | 1 |

Fig. 11 (sheet 1 of 2)

DIGIT OFFSET READ ONLY MEMORY 88-32

Legend:

LTR: LEFT-TO-RIGHT
RTL: RIGHT-TO-LEFT
OFF: DD(CO) FOR STRING(STR)
     DD(CO,C1) FOR (PKD)
DIR: DIRECT FROM DSCR
(MOD N): CTR3 MOD N

| INPUT ADDRESS 128 | 64 | 32 | 16 | 8 | 4 | 2 | 1 | COMMENTS | OUTPUT OPOFF0+ | OPOFF1+ | OPOFF2+ |
|---|---|---|---|---|---|---|---|---|---|---|---|
| DIROFF- | LTROFF- | DSCR08+ | DSCR00+ | DSCR01+ | CTR305+ | CTR306+ | CTR307+ | | | | |
| 1 | 1 | 0 | 0 | X | X | 0 | 0 | RTL-STR-OFF=0-(MOD 4)=0 | 1 | 1 | 1 |
| 1 | 1 | 0 | 0 | X | X | 0 | 1 | RTL-STR-OFF=0-(MOD 4)=1 | 0 | 0 | 1 |
| 1 | 1 | 0 | 0 | X | X | 1 | 0 | RTL-STR-OFF=0-(MOD 4)=2 | 0 | 1 | 1 |
| 1 | 1 | 0 | 0 | X | X | 1 | 1 | RTL-STR-OFF=0-(MOD 4)=3 | 1 | 0 | 1 |
| 1 | 1 | 0 | 1 | X | X | 0 | 0 | RTL-STR-OFF=1-(MOD 4)=0 | 0 | 0 | 1 |
| 1 | 1 | 0 | 1 | X | X | 0 | 1 | RTL-STR-OFF=1-(MOD 4)=1 | 0 | 1 | 1 |
| 1 | 1 | 0 | 1 | X | X | 1 | 0 | RTL-STR-OFF=1-(MOD 4)=2 | 1 | 0 | 1 |
| 1 | 1 | 0 | 1 | X | X | 1 | 1 | RTL-STR-OFF=1-(MOD 4)=3 | 1 | 1 | 1 |
| 1 | 1 | 1 | 0 | 0 | 0 | 0 | 0 | RTL-PKD-OFF=0-(MOD 8)=0 | 1 | 1 | 1 |
| 1 | 1 | 1 | 0 | 0 | 0 | 0 | 1 | RTL-PKD-OFF=0-(MOD 8)=1 | 0 | 0 | 0 |
| 1 | 1 | 1 | 0 | 0 | 0 | 1 | 0 | RTL-PKD-OFF=0-(MOD 8)=2 | 0 | 0 | 1 |
| 1 | 1 | 1 | 0 | 0 | 0 | 1 | 1 | RTL-PKD-OFF=0-(MOD 8)=3 | 0 | 1 | 0 |
| 1 | 1 | 1 | 0 | 0 | 1 | 0 | 0 | RTL-PKD-OFF=0-(MOD 8)=4 | 0 | 1 | 1 |
| 1 | 1 | 1 | 0 | 0 | 1 | 0 | 1 | RTL-PKD-OFF=0-(MOD 8)=5 | 1 | 0 | 0 |
| 1 | 1 | 1 | 0 | 0 | 1 | 1 | 0 | RTL-PKD-OFF=0-(MOD 8)=6 | 1 | 0 | 1 |
| 1 | 1 | 1 | 0 | 0 | 1 | 1 | 1 | RTL-PKD-OFF=0-(MOD 8)=7 | 1 | 1 | 0 |
| 1 | 1 | 1 | 0 | 1 | 0 | 0 | 0 | RTL-PKD-OFF=1-(MOD 8)=0 | 0 | 0 | 0 |
| 1 | 1 | 1 | 0 | 1 | 0 | 0 | 1 | RTL-PKD-OFF=1-(MOD 8)=1 | 0 | 0 | 1 |
| 1 | 1 | 1 | 0 | 1 | 0 | 1 | 0 | RTL-PKD-OFF=1-(MOD 8)=2 | 0 | 1 | 0 |
| 1 | 1 | 1 | 0 | 1 | 0 | 1 | 1 | RTL-PKD-OFF=1-(MOD 8)=3 | 0 | 1 | 1 |
| 1 | 1 | 1 | 0 | 1 | 1 | 0 | 0 | RTL-PKD-OFF=1-(MOD 8)=4 | 1 | 0 | 0 |
| 1 | 1 | 1 | 0 | 1 | 1 | 0 | 1 | RTL-PKD-OFF=1-(MOD 8)=5 | 1 | 0 | 1 |
| 1 | 1 | 1 | 0 | 1 | 1 | 1 | 0 | RTL-PKD-OFF=1-(MOD 8)=6 | 1 | 1 | 0 |
| 1 | 1 | 1 | 0 | 1 | 1 | 1 | 1 | RTL-PKD-OFF=1-(MOD 8)=7 | 1 | 1 | 1 |
| 1 | 1 | 1 | 1 | 0 | 0 | 0 | 0 | RTL-PKD-OFF=2-(MOD 8)=0 | 0 | 0 | 1 |
| 1 | 1 | 1 | 1 | 0 | 0 | 0 | 1 | RTL-PKD-OFF=2-(MOD 8)=1 | 0 | 1 | 0 |
| 1 | 1 | 1 | 1 | 0 | 0 | 1 | 0 | RTL-PKD-OFF=2-(MOD 8)=2 | 0 | 1 | 1 |
| 1 | 1 | 1 | 1 | 0 | 0 | 1 | 1 | RTL-PKD-OFF=2-(MOD 8)=3 | 1 | 0 | 0 |
| 1 | 1 | 1 | 1 | 0 | 1 | 0 | 0 | RTL-PKD-OFF=2-(MOD 8)=4 | 1 | 0 | 1 |
| 1 | 1 | 1 | 1 | 0 | 1 | 0 | 1 | RTL-PKD-OFF=2-(MOD 8)=5 | 1 | 1 | 0 |
| 1 | 1 | 1 | 1 | 0 | 1 | 1 | 0 | RTL-PKD-OFF=2-(MOD 8)=6 | 1 | 1 | 1 |
| 1 | 1 | 1 | 1 | 0 | 1 | 1 | 1 | RTL-PKD-OFF=2-(MOD 8)=7 | 0 | 0 | 0 |
| 1 | 1 | 1 | 1 | 1 | 0 | 0 | 0 | RTL-PKD-OFF=3-(MOD 8)=0 | 0 | 1 | 0 |
| 1 | 1 | 1 | 1 | 1 | 0 | 0 | 1 | RTL-PKD-OFF=3-(MOD 8)=1 | 0 | 1 | 1 |
| 1 | 1 | 1 | 1 | 1 | 0 | 1 | 0 | RTL-PKD-OFF=3-(MOD 8)=2 | 1 | 0 | 0 |
| 1 | 1 | 1 | 1 | 1 | 0 | 1 | 1 | RTL-PKD-OFF=3-(MOD 8)=3 | 1 | 0 | 1 |
| 1 | 1 | 1 | 1 | 1 | 1 | 0 | 0 | RTL-PKD-OFF=3-(MOD 8)=4 | 1 | 1 | 0 |
| 1 | 1 | 1 | 1 | 1 | 1 | 0 | 1 | RTL-PKD-OFF=3-(MOD 8)=5 | 1 | 1 | 1 |
| 1 | 1 | 1 | 1 | 1 | 1 | 1 | 0 | RTL-PKD-OFF=3-(MOD 8)=6 | 0 | 0 | 0 |
| 1 | 1 | 1 | 1 | 1 | 1 | 1 | 1 | RTL-PKD-OFF=3-(MOD 8)=7 | 0 | 0 | 1 |

X   IGNORE VALUE
PKD OPERAND IS PACKED BCD DIGITS
STR OPERAND IS AN ASCII STRING

*Fig. 11. (sheet 2 of 2)*

**0 055 128**

*Fig. 12*
*(sheet 1 of 2)*

20

*Fig.12 (sheet 2 of 2)*

OP1A 84 - OP2A 78 INCREMENT/DECREMENT
READ ONLY MEMORY 84-1 AND 78-1

|  | INPUT ADDRESS | | | | | | | | COMMENTS | | | OUTPUT | | |
|---|---|---|---|---|---|---|---|---|---|---|---|---|---|---|
| 256 | 128 | 64 | 32 | 16 | 8 | 4 | 2 | 1 | | | | | | |
| R D O O | R D A 1 3 Z | R D O 7 | R D O * | R D O * | O P - T Y P | O P - A D O | O P - A D 1 | O P - A D 2 | INPUT ADDRESS | OP1A 84 | OP2A 78 | O P - A M O | O P - A M 1 | O P - A M 2 |
| + | + | + | + | + | + | + | + | + | 32 | * RD05+ | RD03+ | + | + | + |
| | | | | | | | | | 16 | * RD06+ | RD04+ | | | |
| 0 | X | 0 | 0 | 0 | X | A | B | C | NO CHANGE | | | A | B | C |
| 0 | X | 0 | 0 | 1 | X | 0 | 0 | 0 | DECREMENT BY 1 | | | 1 | 1 | 1 |
| 0 | X | 0 | 0 | 1 | X | 0 | 0 | 1 | | | | 0 | 0 | 0 |
| 0 | X | 0 | 0 | 1 | X | 0 | 1 | 0 | | | | 0 | 0 | 1 |
| 0 | X | 0 | 0 | 1 | X | 0 | 1 | 1 | | | | 0 | 1 | 0 |
| 0 | X | 0 | 0 | 1 | X | 1 | 0 | 0 | | | | 0 | 1 | 1 |
| 0 | X | 0 | 0 | 1 | X | 1 | 0 | 1 | | | | 1 | 0 | 0 |
| 0 | X | 0 | 0 | 1 | X | 1 | 1 | 0 | | | | 1 | 0 | 1 |
| 0 | X | 0 | 0 | 1 | X | 1 | 1 | 1 | DECREMENT BY 1 | | | 1 | 1 | 0 |
| 0 | X | 0 | 1 | 0 | X | 0 | 0 | 0 | DECREMENT BY 2 | | | 1 | 1 | 0 |
| 0 | X | 0 | 1 | 0 | X | 0 | 0 | 1 | | | | 1 | 1 | 1 |
| 0 | X | 0 | 1 | 0 | X | 0 | 1 | 0 | | | | 0 | 0 | 0 |
| 0 | X | 0 | 1 | 0 | X | 0 | 1 | 1 | | | | 0 | 0 | 1 |
| 0 | X | 0 | 1 | 0 | X | 1 | 0 | 0 | | | | 0 | 1 | 0 |
| 0 | X | 0 | 1 | 0 | X | 1 | 0 | 1 | | | | 0 | 1 | 1 |
| 0 | X | 0 | 1 | 0 | X | 1 | 1 | 0 | | | | 1 | 0 | 0 |
| 0 | X | 0 | 1 | 0 | X | 1 | 1 | 1 | DECREMENT BY 2 | | | 1 | 0 | 1 |
| 0 | X | 0 | 1 | 1 | X | 0 | 0 | 0 | DECREMENT BY 4 | | | 1 | 0 | 0 |
| 0 | X | 0 | 1 | 1 | X | 0 | 0 | 1 | | | | 1 | 0 | 1 |
| 0 | X | 0 | 1 | 1 | X | 0 | 1 | 0 | | | | 1 | 1 | 0 |
| 0 | X | 0 | 1 | 1 | X | 0 | 1 | 1 | | | | 1 | 1 | 1 |
| 0 | X | 0 | 1 | 1 | X | 1 | 0 | 0 | | | | 0 | 0 | 0 |
| 0 | X | 0 | 1 | 1 | X | 1 | 0 | 1 | | | | 0 | 0 | 1 |
| 0 | X | 0 | 1 | 1 | X | 1 | 1 | 0 | | | | 0 | 1 | 0 |
| 0 | X | 0 | 1 | 1 | X | 1 | 1 | 1 | DECREMENT BY 4 | | | 0 | 1 | 1 |

Fig. 13. (sheet 1 of 3)

22

OP1A 84 - OP2A 78 INCREMENT/DECREMENT
READ ONLY MEMORY 84-1 AND 78-1

| 256 | 128 | 64 | 32 | 16 | 8 | 4 | 2 | 1 | COMMENTS | | | 0 | 0 | 0 |
|---|---|---|---|---|---|---|---|---|---|---|---|---|---|---|
| R | R | R | R | R | 0 | 0 | 0 | 0 | INPUT | OP1A | OP2A | P | P | P |
| D | D | D | D | D | P | P | P | P | ADDRESS | 84 | 78 | - | - | - |
| 0 | A | 0 | 0 | 0 | - | - | - | - | | | | A | A | A |
| 0 | 1 | 7 | * | * | T | A | A | A | 32 | * RDO5+ | RDO3+ | M | M | M |
| | 3 | | | | Y | D | D | D | 16 | * RDO6+ | RDO4+ | 0 | 1 | 2 |
| | Z | | | | P | 0 | 1 | 2 | | | | | | |
| + | + | + | + | + | + | + | + | + | | | | + | + | + |

| 256 | 128 | 64 | 32 | 16 | 8 | 4 | 2 | 1 | COMMENTS | A | B | C |
|---|---|---|---|---|---|---|---|---|---|---|---|---|
| 0 | X | 1 | 0 | 0 | X | A | B | C | NO CHANGE | A | B | C |
| 0 | X | 1 | 0 | 1 | X | 0 | 0 | 0 | INCREMENT BY 1 | 0 | 0 | 1 |
| 0 | X | 1 | 0 | 1 | X | 0 | 0 | 1 | | 0 | 1 | 0 |
| 0 | X | 1 | 0 | 1 | X | 0 | 1 | 0 | | 0 | 1 | 1 |
| 0 | X | 1 | 0 | 1 | X | 0 | 1 | 1 | | 1 | 0 | 0 |
| 0 | X | 1 | 0 | 1 | X | 1 | 0 | 0 | | 1 | 0 | 1 |
| 0 | X | 1 | 0 | 1 | X | 1 | 0 | 1 | | 1 | 1 | 0 |
| 0 | X | 1 | 0 | 1 | X | 1 | 1 | 0 | | 1 | 1 | 1 |
| 0 | X | 1 | 0 | 1 | X | 1 | 1 | 1 | INCREMENT BY 1 | 0 | 0 | 0 |
| 0 | X | 1 | 1 | 0 | X | 0 | 0 | 0 | INCREMENT BY 2 | 0 | 1 | 0 |
| 0 | X | 1 | 1 | 0 | X | 0 | 0 | 1 | | 0 | 1 | 1 |
| 0 | X | 1 | 1 | 0 | X | 0 | 1 | 0 | | 1 | 0 | 0 |
| 0 | X | 1 | 1 | 0 | X | 0 | 1 | 1 | | 1 | 0 | 1 |
| 0 | X | 1 | 1 | 0 | X | 1 | 0 | 0 | | 1 | 1 | 0 |
| 0 | X | 1 | 1 | .0 | X | 1 | 0 | 1 | | 1 | 1 | 1 |
| 0 | X | 1 | 1 | 0 | X | 1 | 1 | 0 | | 0 | 0 | 0 |
| 0 | X | 1 | 1 | 0 | X | 1 | 1 | 1 | INCREMENT BY 2 | 0 | 0 | 1 |
| 0 | X | 1 | 1 | 1 | X | 0 | 0 | 0 | INCREMENT BY 4 | 1 | 0 | 0 |
| 0 | X | 1 | 1 | 1 | X | 0 | 0 | 1 | | 1 | 0 | 1 |
| 0 | X | 1 | 1 | 1 | X | 0 | 1 | 0 | | 1 | 1 | 0 |
| 0 | X | 1 | 1 | 1 | X | 0 | 1 | 1 | | 1 | 1 | 1 |
| 0 | X | 1 | 1 | 1 | X | 1 | 0 | 0 | | 0 | 0 | 0 |
| 0 | X | 1 | 1 | 1 | X | 1 | 0 | 1 | | 0 | 0 | 1 |
| 0 | X | 1 | 1 | 1 | X | 1 | 1 | 0 | | 0 | 1 | 0 |
| 0 | X | 1 | 1 | 1 | X | 1 | 1 | 1 | INCREMENT BY 4 | 0 | 1 | 1 |

Fig. 13. (sheet 2 of 3)

23

OP1A 84 - OP2A 78 INCREMENT/DECREMENT
READ ONLY MEMORY 84-1 AND 78-1

| 256 | 128 | 64 | 32 | 16 | 8 | 4 | 2 | 1 | COMMENTS | | | OP1 | OP2 | OP3 |
|---|---|---|---|---|---|---|---|---|---|---|---|---|---|---|
| | | INPUT ADDRESS | | | | | | | | | | OUTPUT | | |
| R D O O | R D A 1 3 Z | R D O 7 | R D O * | R D O * | O P - T Y P | O P - A D O | O P - A D 1 | O P - A D 2 | INPUT ADDRESS | OP1A 84 | OP2A 78 | O P - A M O | O P - A M 1 | O P - A M 2 |
| | | | | | | | | | 32 | * RDO5+ | RDO3+ | | | |
| | | | | | | | | | 16 | * RDO6+ | RDO4+ | | | |
| ▼ | + | + | + | + | + | + | + | + | | | | + | + | + |
| 1 | 0 | X | X | X | X | A | B | C | NO CHANGE | | | A | B | C |
| 1 | 1 | 0 | X | 0 | X | A | B | C | NO CHANGE | | | A | B | C |
| 1 | 1 | 0 | X | 1 | 0 | 0 | 0 | 0 | STRING→DECREMENT BY 2 | | | 1 | 1 | 0 |
| 1 | 1 | 0 | X | 1 | 0 | 0 | 0 | 1 | | | | 1 | 1 | 1 |
| 1 | 1 | 0 | X | 1 | 0 | 0 | 1 | 0 | | | | 0 | 0 | 0 |
| 1 | 1 | 0 | X | 1 | 0 | 0 | 1 | 1 | | | | 0 | 0 | 1 |
| 1 | 1 | 0 | X | 1 | 0 | 1 | 0 | 0 | | | | 0 | 1 | 0 |
| 1 | 1 | 0 | X | 1 | 0 | 1 | 0 | 1 | | | | 0 | 1 | 1 |
| 1 | 1 | 0 | X | 1 | 0 | 1 | 1 | 0 | | | | 1 | 0 | 0 |
| 1 | 1 | 0 | X | 1 | 0 | 1 | 1 | 1 | STRING→DECREMENT BY 2 | | | 1 | 0 | 1 |
| 1 | 1 | 0 | X | 1 | 1 | 0 | 0 | 0 | PKD →DECREMENT BY 1 | | | 1 | 1 | 1 |
| 1 | 1 | 0 | X | 1 | 1 | 0 | 0 | 1 | | | | 0 | 0 | 0 |
| 1 | 1 | 0 | X | 1 | 1 | 0 | 1 | 0 | | | | 0 | 0 | 1 |
| 1 | 1 | 0 | X | 1 | 1 | 0 | 1 | 1 | | | | 0 | 1 | 0 |
| 1 | 1 | 0 | X | 1 | 1 | 1 | 0 | 0 | | | | 0 | 1 | 1 |
| 1 | 1 | 0 | X | 1 | 1 | 1 | 0 | 1 | | | | 1 | 0 | 0 |
| 1 | 1 | 0 | X | 1 | 1 | 1 | 1 | 0 | | | | 1 | 0 | 1 |
| 1 | 1 | 0 | X | 1 | 1 | 1 | 1 | 1 | PKD →DECREMENT BY 1 | | | 1 | 1 | 0 |
| 1 | 1 | 1 | X | 0 | X | A | B | C | NO CHANGE | | | A | B | C |
| 1 | 1 | 1 | X | 1 | 0 | 0 | 0 | 0 | STRING→INCREMENT BY 2 | | | 0 | 1 | 0 |
| 1 | 1 | 1 | X | 1 | 0 | 0 | 0 | 1 | | | | 0 | 1 | 1 |
| 1 | 1 | 1 | X | 1 | 0 | 0 | 1 | 0 | | | | 1 | 0 | 0 |
| 1 | 1 | 1 | X | 1 | 0 | 0 | 1 | 1 | | | | 1 | 0 | 1 |
| 1 | 1 | 1 | X | 1 | 0 | 1 | 0 | 0 | | | | 1 | 1 | 0 |
| 1 | 1 | 1 | X | 1 | 0 | 1 | 0 | 1 | | | | 1 | 1 | 1 |
| 1 | 1 | 1 | X | 1 | 0 | 1 | 1 | 0 | | | | 0 | 0 | 0 |
| 1 | 1 | 1 | X | 1 | 0 | 1 | 1 | 1 | STRING→INCREMENT BY 2 | | | 0 | 0 | 1 |
| 1 | 1 | 1 | X | 1 | 1 | 0 | 0 | 0 | PKD →INCREMENT BY 1 | | | 0 | 0 | 1 |
| 1 | 1 | 1 | X | 1 | 1 | 0 | 0 | 1 | | | | 0 | 1 | 0 |
| 1 | 1 | 1 | X | 1 | 1 | 0 | 1 | 0 | | | | 0 | 1 | 1 |
| 1 | 1 | 1 | X | 1 | 1 | 0 | 1 | 1 | | | | 1 | 0 | 0 |
| 1 | 1 | 1 | X | 1 | 1 | 1 | 0 | 0 | | | | 1 | 0 | 1 |
| 1 | 1 | 1 | X | 1 | 1 | 1 | 0 | 1 | | | | 1 | 1 | 0 |
| 1 | 1 | 1 | X | 1 | 1 | 1 | 1 | 0 | | | | 1 | 1 | 1 |
| 1 | 1 | 1 | X | 1 | 1 | 1 | 1 | 1 | PKD→INCREMENT BY 1 | | | 0 | 0 | 0 |

X    IGNORE VALUE

A
B    } INPUT VALUES COPIED TO OUTPUT
C

——► THEREFORE
PKD  OPERAND IS PACKED BCD DIGITS
STR   OPERAND IS AN ASCII STRING

## Fig. 13. (sheet 3 of 3)

Fig.14.(sheet 1 of 2)

**0 055 128**

*Fig.14. (sheet 2 of 2)*

26